(19) Europäisches Patentamt
European Patent Office
Office européen des brevets

(11) EP 4 730 415 A1

(12) EUROPEAN PATENT APPLICATION
published in accordance with Art. 153(4) EPC

(43) Date of publication:
**22.04.2026 Bulletin 2026/17**

(21) Application number: **24823623.4**

(22) Date of filing: **04.06.2024**

(51) International Patent Classification (IPC):
***H01M 4/13*** (2010.01) ***H01M 4/62*** (2006.01)
***H01M 4/36*** (2006.01) ***H01M 4/587*** (2010.01)
***H01M 4/38*** (2006.01) ***H01M 10/052*** (2010.01)
***C08L 33/00*** (2006.01) ***C08L 9/06*** (2006.01)
***C08L 9/02*** (2006.01) ***C08L 1/02*** (2006.01)

(52) Cooperative Patent Classification (CPC):
**C08L 1/02; C08L 9/02; C08L 9/06; C08L 33/00; H01M 4/13; H01M 4/36; H01M 4/38; H01M 4/587; H01M 4/62; H01M 10/052;** Y02E 60/10

(86) International application number:
**PCT/KR2024/007641**

(87) International publication number:
**WO 2024/258103 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.06.2023 KR 20230075572**

(71) Applicant: **SK On Co., Ltd.**
**Seoul 03161 (KR)**

(72) Inventors:
- **KIM, Jeong A**
  **Daejeon 34124 (KR)**
- **KIM, Sung Do**
  **Daejeon 34124 (KR)**
- **LEE, Yong Seok**
  **Daejeon 34124 (KR)**

(74) Representative: **Stolmár & Partner Patentanwälte PartG mbB**
**Blumenstraße 17**
**80331 München (DE)**

# (54) ELECTRODE

(57) The present disclosure can provide an electrode that prevents wrinkles and swelling and exhibits excellent capacity retention and energy density. Furthermore, the present disclosure can provide a battery cell, a battery module, and a battery pack comprising the electrode, and an electrical device comprising at least one of the battery cells, battery module, and battery pack.

FIG. 6

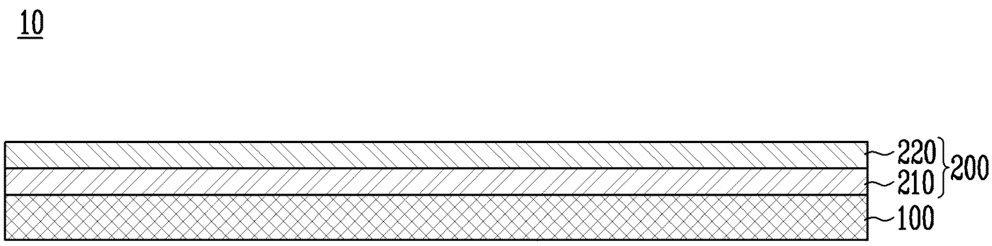

## Description

### [Field]

This disclosure relates to an electrode. More specifically, this disclosure relates to an electrode and applications thereof.

### [Background technology]

Recently, the demand for mobile devices such as smartphones, tablet PCs, and wireless earbuds has been increasing. Additionally, with the development of electric vehicles, energy storage batteries, robots, and satellites, research on high-performance secondary batteries capable of repeated charging and discharging as an energy source is actively underway.

Currently, commercially available secondary batteries include nickel-cadmium batteries, nickel-hydrogen batteries, nickel-zinc batteries, and lithium-ion batteries. Among these, lithium-ion batteries have the advantages of almost no memory effect, free charging and discharging, extremely low self-discharge rates, and high energy density compared to nickel-based secondary batteries.

Meanwhile, an electrode refers to the positive and negative terminals of a battery cell. The electrode is typically manufactured by coating a slurry containing an electrode active material onto a metal plate-shaped current collector and then drying it.

The electrode active material stores or releases electron-transferring material during the charging and discharging of the battery. For example, in a lithium battery, the electrode active material stores or releases lithium ions during charging and discharging.

When the charging and discharging of the cell is repeated, the storage or release of the electron-transferring material is repeated, and during this process, the electrode active material undergoes repeated expansion and contraction. If this process continues, wrinkles form on the electrode, and swelling occurs, which is a problem.

### [Detailed Description of the Invention]

### [Technical Problem]

The present disclosure aims to provide an electrode that prevents the occurrence of wrinkles and swelling.

Additionally, the present disclosure aims to provide an electrode with excellent capacity retention and energy density.

Furthermore, the present disclosure aims to provide a battery cell, battery module, and battery pack including the electrode, and an electrical device including at least one of the battery cells, battery modules, or battery packs.

### [Technical solution]

An electrode according to an embodiment of the present disclosure may comprise: a current collector; and an active material layer positioned on at least a surface of the current collector; wherein the active material layer includes a first active material layer in contact with the current collector and including a first binder, and a second active material layer positioned on the first active material layer and including a second binder, wherein a glass transition temperature of the first binder is greater than a glass transition temperature of the second binder, and a ratio of the thickness of the first active material layer to the thickness of the second active material layer is greater than 1.

In an embodiment, the glass transition temperature of the first binder may be 50°C to 300°C, and the glass transition temperature of the second binder may be -100°C to 10°C.

In an embodiment, the weight average molecular weight of the first binder may be 10,000 g/mol to 200,000 g/mol, and the weight average molecular weight of the second binder may be 5,000 g/mol to 500,000 g/mol.

In an embodiment, the first binder may include a polymer containing polar functional groups.

In an embodiment, the first binder may be an electrode containing an acrylic polymer.

In an embodiment, the second binder may include a polymer including a first repeating unit and a second repeating unit, wherein the first repeating unit may include carbon-carbon multiple bonds, and the second repeating unit includes an aromatic group.

In an embodiment, a ratio of the number of moles of the first repeating unit to the number of moles of the second repeating unit in the polymer may be 1 to 5.

In an embodiment, the second binder may further contain a cellulose polymer.

In an embodiment, a weight ratio of the polymer including the first repeating unit and the second repeating unit to

the cellulose polymer in the second binder may be 0.1 to 1.

In an embodiment, the first active material layer may contain the first binder in an amount of 1 wt% to 5 wt% by the total weight, and the second active material layer may contain the second binder in an amount of 3 wt% to 6 wt% by the total weight.

In an embodiment, the first active material layer and the second active material layer each independently may contain a carbon-based active material and a silicon-based active material.

In an embodiment, a weight ratio of the carbon-based active material to the silicon-based active material may be 1 to 10 in the first active material layer, and a weight ratio of the carbon-based active material to the silicon-based active material may be 1 to 10 in the second active material layer.

In an embodiment, a ratio of an average particle size of the carbon-based active material to an average particle size of the silicon-based active material may be 1 to 20 in the first active material layer, and a ratio of an average particle size of the carbon-based active material to an average particle size of the silicon-based active material may be 1 to 20 in the second active material layer.

In an embodiment, the first active material layer may include the carbon-based active material in an amount of 1,000 to 10,000 parts by weight relative to 100 parts by weight of the first binder, and the second active material layer includes the carbon-based active material in an amount of 500 to 5,000 parts by weight relative to 100 parts by weight of the second binder.

In an embodiment, a difference between the glass transition temperature of the first binder and the glass transition temperature of the second binder may be 50°C or more.

A battery cell according to another embodiment of present disclosure may comprise a positive electrode; a negative electrode; and a separator interposed between the positive electrode and the negative electrode; wherein the negative electrode may include a negative electrode current collector and a negative electrode active material layer positioned on at least a surface of the negative electrode current collector, wherein the negative electrode active material layer may include a first negative electrode active material layer in contact with the negative electrode current collector and including a first binder, and a second negative electrode active material layer positioned on the first negative electrode active material layer and including a second binder, wherein a glass transition temperature of the first binder may be greater than a glass transition temperature of the second binder, and a ratio of the thickness of the first negative electrode active material layer to the thickness of the second negative electrode active material layer may be greater than 1.

A battery cell assembly according to an example of the present disclosure may comprise one or more battery cells, wherein the battery cells may be battery cells according to an example of the present disclosure.

An electric device according to an example of the present disclosure may comprise one or more selected from the group consisting of one or more battery cells and one or more battery cell assemblies, wherein the battery cells may be battery cells according to an example of the present disclosure, and the battery cell assemblies may be battery cell assemblies according to an example of the present disclosure.

**[Effect]**

The present disclosure may provide an electrode that prevents wrinkling and swelling phenomena.

Additionally, the present disclosure may provide an electrode that has excellent capacity retention and energy density.

Furthermore, the present disclosure may provide a battery cell, a battery module, and a battery pack including the electrode, and an electrical device comprising at least one of the battery cells, battery modules, or battery packs.

**[Description of the drawing]**

FIG. 1 is a diagram illustrating an exemplary structure of a battery cell according to an embodiment of the present disclosure.

FIG. 2 is a diagram illustrating an exemplary structure of a battery module according to an embodiment of the present disclosure.

FIG. 3 is a diagram illustrating an exemplary structure of a battery pack according to an embodiment of the present disclosure.

FIG. 4 is a diagram showing the evaluation results of the rapid life capacity retention rate for battery cells manufactured in Example 1 and Comparative Examples 1 to 5.

FIG. 5 is a diagram showing the electrode surface of the battery cells manufactured in Example 1 and Comparative Example 1.

FIG. 6 is a diagram illustrating an exemplary structure of an electrode according to an embodiment of the present

disclosure.

**[Embodiments]**

Unless otherwise specified, the physical properties mentioned in this disclosure are measured at room temperature and atmospheric pressure.

The term "room temperature" used in this disclosure refers to the natural temperature without heating or cooling, such as any temperature within the range of 10°C to 30°C, for example, about 15°C or higher, about 18°C or higher, about 20°C or higher, about 23°C or higher, about 27°C or lower, or 25°C. Unless otherwise specified in this disclosure, the unit of temperature is Celsius °C.

Among the physical properties mentioned in this disclosure, when the measurement pressure affects the physical property, unless otherwise specified, the physical property refers to the property measured at atmospheric pressure.

The term "atmospheric pressure" used in this disclosure refers to the natural pressure without compression or decompression, typically corresponding to about 700 mmHg to 800 mmHg of atmospheric pressure.

The terms "a to b" used in this disclosure refer to the range including both a and b. For example, including a to b by weight means the same as including a to b by weight.

The term "substitution" used in this disclosure refers to the replacement of a hydrogen atom bonded to a carbon atom in a compound with another substituent. The position of the substitution is the position where the hydrogen atom is replaced, and if the substituent is replaceable, it is not specifically limited. If two or more substituents are present, they may be the same or different.

The term "substituent" as used herein refers to an atom or group of atoms that replaces one or more hydrogen atoms on the parent carbon chain of a hydrocarbon. Additionally, substituents are not limited to those described below, and unless otherwise specified herein, the substituents may be further substituted by the substituents described below or by any other substituents.

The term "alkyl group" or "alkylene group" used in this disclosure, unless otherwise specified, refers to a straight-chain or branched-chain alkyl group or alkylene group having 1 to 20 carbon atoms, or 1 to 16 carbon atoms, or 1 to 12 carbon atoms, or 1 to 8 carbon atoms, or 1 to 6 carbon atoms, or may be a cyclic alkyl group or alkylene group having 3 to 20 carbon atoms, or 3 to 16 carbon atoms, or 3 to 12 carbon atoms, or 3 to 8 carbon atoms, , or 3 to 6 carbon atoms. Here, the cyclic alkyl group or alkylene group includes both alkyl groups or alkylene groups consisting solely of a ring structure and alkyl groups or alkylene groups containing a ring structure within their structure. For example, cyclohexyl and methyl cyclohexyl are both examples of cyclic alkyl groups. Additionally, for example, alkyl groups or alkylene groups may specifically include methyl(en), ethyl(en), n-propyl(en), isopropyl(en), n-butyl(ene), isobutyl(ene), tert-butyl(ene), sec-butyl(ene), 1-methyl-butyl(ene), 1-ethylbutyl(ene), n-pentyl(ene), isopentyl(ene), neopentyl(ene), tert-pentyl(ene), n-hexyl(ene), 1-methylpentyl(ene), 2-methylpentyl(ene), 4-methyl-2-pentyl(ene), 3,3-dimethylbutyl(ene), 2-ethylbutyl(ene), n-heptyl(len), 1-methylhexyl(len), n-octyl(len), tert-octyl(len), 1-methylheptyl(len), 2-ethylhexyl(len), 2-propylpentyl(len), n-nonyl(len), 2,2-dimethylheptyl(len), 1-ethylpropyl(len), 1,1-dimethylpropyl(len), isooctyl(len), 2-methylpentyl(len), 4-methylhexyl(len), 5-methylhexyl(len), etc., may be exemplified, but are not limited thereto. Additionally, cycloalkyl or cycloalkylene groups may specifically include cyclopropyl(len), cyclobutyl(len), cyclopentyl(len), 3-methylcyclopentyl(len), 2,3-dimethylcyclopentyl(len), cyclohexyl(len), 3-methylcyclohexyl(en), 4-methylcyclohexyl(en), 2,3-dimethylcyclohexyl(en), 3,4,5-trimethylcyclohexyl(en), 4-tert-butylcyclohexyl(en), cycloheptyl(ene), cyclooctyl(ene), etc., may be exemplified, but are not limited thereto.

The terms "alkyl group" or "alkylene group" used herein, unless otherwise specified, refer to non-cyclic alkyl or alkylene groups having 2 to 20 carbon atoms, or 2 to 16 carbon atoms, or 2 to 12 carbon atoms, or 2 to 8 carbon atoms, or 2 to 6 carbon atoms, in a straight chain or branched chain; or a cyclic alkyl or alkylene group having 3 to 20 carbon atoms, or 3 to 16 carbon atoms, or 3 to 12 carbon atoms, or 3 to 8 carbon atoms, or 3 to 6 carbon atoms. Here, if the alkenyl group or alkenylene group includes a ring structure, it corresponds to a cyclic alkenyl group or alkenylene group. Additionally, for example, ethenyl(ene), n-propenyl(ene), isopropenyl(ene), n-butenyl(ene), isobutenyl(ene), tert-butenyl(ene), sec-butenyl(ene), 1-methyl-butenyl(ene), 1-ethyl-butenyl(ene), n-pentenyl(ene), isopentenyl(ene), neopentenyl(ene), tert-pentenyl(ene), n-hexenyl(ene), 1-methylpentenyl(ene), 2-methylpentenyl(ene), 4-methyl-2-pentenyl(ene), 3,3-dimethylbutenyl(ene), 2-ethylbutenyl(ene), n-heptenyl(ene), 1-methylhexenyl(ene), n-octenyl(ene), tert-octenyl(ene), 1-methylheptenyl(ene), 2-ethylhexenyl(ene), Examples include 2-propylpentenyl(Ren), n-nonylenyl(Ren), 2,2-dimethylheptenyl(Ren), 1-ethylpropenyl(Ren), 1,1-dimethylpropenyl(Ren), isohexenyl(Ren), 2-methylpentenyl(Ren), 4-methylhexenyl(Ren), and 5-methylhexenyl(Ren) may be exemplified, but are not limited thereto.

The terms "alkynyl group" or "alkynyl" used herein, unless otherwise specified, refer to a non-cyclic alkyl or alkenyl group having 2 to 20 carbon atoms, or 2 to 16 carbon atoms, or 2 to 12 carbon atoms, or 2 to 8 carbon atoms, or 2 to 6 carbon atoms, or a straight-chain or branched-chain alkyl or alkenyl group, or a cyclic alkyl or alkyl group having 3 to 20 carbon atoms, or 3 to 16 carbon atoms, or 3 to 12 carbon atoms, or 3 to 8 carbon atoms, or 3 to 6 carbon atoms. Here, if the

alkyl or alkylene group includes a ring structure, it corresponds to a ring-shaped alkyl or alkylene group. Additionally, for example, ethynyl(ene), n-propynyl(ene), isopropynyl(ene), n-butynyl(ene), isobutynyl(ene), tert-butynyl(ene), sec-butynyl(ene), 1-methyl-butynyl(ene), 1-ethyl-butynyl(ene), n-pentynyl(ene), isopentynyl(ene), neopentynyl(ene), tert-pentynyl(ene), n-hexynyl(ene), 1-methylpentyl(ene), 2-methylpentyl(ene), 4-methyl-2-pentyl(ene), 3,3-dimethylbutyl(ene), 2-ethylbutyl(ene), n-heptyl(ene), 1-methylhexyl(en), n-octyl(en), tert-octyl(en), 1-methylheptyl(en), 2-ethylheptyl(en), 2-propylpentyl(en), n-nonyl(en), 2,2-dimethylheptyl(en), 1-ethylpropylenyl(len), 1,1-dimethylpropylenyl(len), isooctylenyl(len), 2-methylpentylenyl(len), 4-methylhexylenyl(len), 5-methylhexylenyl(len), etc., may be exemplified, but are not limited thereto. Additionally, cycloalkynyl groups or cycloalkynyl groups may specifically include cyclopropynyl(en), cyclobutynyl(en), cyclopentynyl(en), 3-methylcyclopentynyl(en), 2,3-dimethylcyclopentynyl(en), cyclohexynyl(en), 3-methylcyclohexynyl(len), 4-methylcyclohexynyl(len), 2,3-dimethylcyclohexynyl(len), 3,4,5-trimethylcyclohexynyl(len), 4-tert-butylcyclohexynyl(len), cycloheptinyl(len), cyclooctinyl(len), etc., may be exemplified, but are not limited thereto.

The above alkyl groups, alkylene groups, alkenyl groups, alkenylene groups, alkynyl groups, and alkynylene groups may each be independently substituted by one or more substituents or may be unsubstituted and present as hydrogen. The substituent may be at least one selected from the group consisting of a halogen element, an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

Additionally, in this disclosure, the carbon number of alkyl groups, alkylene groups, alkenyl groups, alkenylene groups, alkynyl groups, and alkynylene groups refers to the carbon number of the structure corresponding to the main chain, excluding the carbon number of substituents, unless otherwise specified.

The term "aromatic group" used herein may include both aryl groups and heteroaryl groups.

The term "aryl group" as used herein refers to an aromatic ring from which one hydrogen atom has been removed, and the aforementioned aromatic hydrocarbon ring may include monocyclic or polycyclic rings. The aryl group is not specifically limited in carbon number, but unless otherwise specified, it may be an aryl group having a carbon number of 6 to 30, or 6 to 26, or 6 to 22, or 6 to 20, or 6 to 18, or 6 to 15. Furthermore, the term "arylene group" used herein refers to an aryl group having two bonding positions, i.e., a divalent group. Except for the fact that they are divalent, the descriptions of the aryl groups mentioned above apply to them. The aryl groups may include, for example, phenyl groups, phenethyl groups, phenylpropyl groups, benzyl groups, tolyl groups, xylyl groups, or naphthyl groups, but are not limited thereto.

The term "heteroaryl group" used in this disclosure refers to an aromatic ring containing one or more heteroatoms other than carbon, specifically, the heteroatoms may include one or more atoms selected from the group consisting of nitrogen, oxygen, sulfur, selenium, and tellurium. In this context, the atoms forming the ring structure of the heteroaryl group may be referred to as ring atoms. Additionally, the heteroaryl group may include a single-ring or multi-ring structure. The heteroaryl group is not specifically limited in carbon number, but unless otherwise specified, it may have a carbon number of 2 to 30, or 2 to 26, or 2 to 22, or 2 to 20, or 2 to 18, or 2 to 15. In other examples, the heteroaryl group is not specifically limited in the number of reducing agents, but may be a heteroaryl group having 5 to 30, 5 to 25, 5 to 20, 5 to 15, 5 to 10, or 5 to 8 reducing agents. The heteroaryl groups may be, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a pyrimidyl group, a triazinyl group, an acridyl group, a pyridazinyl group, a pyrazinyl group, a quinolinyl group, a quinazolinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilole group, dibenzosilole group, phenanthrolinyl group, isoxazolyl group, thiadiazolyl group, phenothiazinyl group, phenoxazine group, and their condensed structures, among others, may be exemplified, but are not limited thereto.

Additionally, the term "heteroaryl" used herein refers to a heteroaryl group having two bonding positions, i.e., a divalent group. Except for being divalent, the descriptions of the heteroaryl groups mentioned above apply to these groups.

The aryl groups and heteroaryl groups may each be independently substituted by one or more substituents or may be unsubstituted and present as hydrogen. The substituents include halogen elements, aryl groups, heteroaryl groups, epoxy groups, alkoxy groups, cyano groups, carboxyl groups, acryloyl groups, methacryloyl groups, acryloyloxy groups, methacryloyloxy groups, carbonyl groups, and hydroxy groups, , but are not limited thereto.

Furthermore, in this disclosure, the carbon number of aryl groups and heteroaryl groups refers to the carbon number of the structure corresponding to the main chain, excluding the carbon number included in substituents, unless otherwise specified. Additionally, the number of reducing agents in the heteroaryl groups refers to the number of reducing agents in the structure corresponding to the main chain, excluding the number of reducing agents included in substituents, unless otherwise specified.

The present disclosure provides an electrode 10 that prevents wrinkling and swelling phenomena and has excellent capacity retention and energy density. Furthermore, the present disclosure provides a battery cell 1, a battery module 2, and a battery pack 3 including the electrode 10, and an electrical device including at least one of the battery cell 1, the battery module 2, and the battery pack 3. Examples of the battery cell 1, battery module 2, and battery pack 3 are shown

in FIGS. 1 to 3, respectively.

The electrode 10 according to an example of the present disclosure may include a current collector 100 and an active material layer 200. The active material layer 200 may be positioned on at least a surface of the current collector 100.

In the electrode 10 according to an embodiment of the present disclosure, the current collector 100 may be made of a material that is electrically conductive and chemically durable. Generally, the current collector 100 may be made of materials such as iron, copper, aluminum, nickel, stainless steel, titanium, tantalum, gold, or platinum, and these materials may be used alone or in combination of two or more types.

Additionally, the collector assembly 100 may have its material determined based on whether the electrode 10 is a positive electrode or a negative electrode. When the electrode 10 is a positive electrode, the current collector 100 is a positive current collector 100, and when the electrode 10 is a negative electrode, the current collector 100 may be a negative current collector 100. Additionally, the positive electrode current collector 100 is not specifically limited in terms of type, size, or shape, provided that it possesses conductivity without causing chemical changes in the battery cell 1. The positive electrode current collector 100 may include, for example, stainless steel, aluminum, nickel, titanium, sintered carbon, or materials with surfaces treated with carbon, nickel, titanium, or silver on the surface of aluminum or stainless steel. The negative electrode current collector 100 may be any material that induces chemical changes in the battery cell 1 while maintaining conductivity, and its type, size, and shape are not particularly limited. The negative electrode current collector 100 may include, for example, copper, stainless steel, aluminum, nickel, titanium, sintered carbon, or materials with surfaces treated with carbon, nickel, titanium, silver, or the like, or aluminum-cadmium alloys.

Additionally, the current collector 100 may have an appropriate thickness as needed. Although not specifically limited, the current collector 100 may have a thickness of 1 μm to 500 μm, 1 μm to 300 μm, 1 μm to 100 μm, or 1 μm to 50 μm.

The terms "thickness or height, width, and length" used in this disclosure refer to average values unless otherwise specified, and measurements may be performed using measuring instruments capable of measuring each of thickness or height, width, and length in accordance with conventional methods in the industry.

Additionally, the current collector 100 may form microscopic irregularities on its surface to enhance adhesion with the active material layer 200. For example, the shape of the collector may be selected from one or more of the following film, sheet, foil, net, porous material, foam, and non-woven fabric.

In the electrode 10 according to an embodiment of the present disclosure, the active material layer 200 may be formed by a slurry composition. Specifically, the active material layer 200 refers to the dried form of the slurry composition, and may also refer to a form in which rolling is performed after drying, as needed.

The term "drying" used in this disclosure refers to a state in which the solvent is substantially absent, such as a state in which the amount of solvent contained in each layer is about 1 wt% or less, 0.5 wt% or less, 0.1 wt% or less, or 0.05 wt% or less. The drying conditions applied for this purpose are not particularly limited and may be adjusted to achieve the aforementioned solvent content.

Additionally, the active material layer 200 can be formed by applying the slurry composition to at least one surface of the substrate 100 and drying it. As mentioned earlier, rolling can be performed after drying if necessary. The rolling can be performed using known methods, such as using a rolling die. Furthermore, the method of applying the slurry composition is not particularly limited and may utilize known methods. Specifically, the method of applying the slurry composition may include methods such as the doctor blade method, the dip method, the reverse roll method, the direct roll method, the gravure method, the extrusion method, or the brush coating method. The coating thickness of the slurry composition can be applied at an appropriate thickness considering the thickness after drying, and the aforementioned known methods can be appropriately selected and performed depending on the coating thickness.

The slurry composition forming the active material layer 200 may include various components. Additionally, the slurry composition may be in a state where the various components are appropriately dispersed. The slurry composition may be manufactured by introducing the various components in an appropriate method and order, followed by an appropriate mixing method. The mixing method is not particularly limited and may utilize known methods. Specifically, the mixing method may utilize mixers such as a ball mill, sand mill, bead mill, pigment disperser, ultrasonic disperser, homogenizer, rotary mixer, or fil mix. Specific details regarding the slurry composition for forming the active material layer 200 will be described later.

The active material layer 200 may be in direct contact with the current collector 100 or may be positioned on the current collector 100 even if it is not in direct contact. For example, a separate layer may be provided between the current collector 100 and the active material layer 200.

In the electrode 10 according to an embodiment of the present disclosure, the active material layer 200 may have a single-layer structure. In other embodiments, the active material layer 200 in the electrode 10 may have a multi-layer structure. In order to prevent the occurrence of wrinkles and swelling of the electrode 10 and to secure excellent capacity retention and energy density, it may be more advantageous for the active material layer 200 to have a multi-layer structure.

In the electrode 10 according to an embodiment of the present disclosure, the active material layer 200 may include a first active material layer 210 and a second active material layer 220.

FIG. 6 is a diagram illustrating an exemplary structure of an electrode according to an embodiment of the present disclosure. Referring to FIG. 6, the electrode 10 includes a current collector 100 and an active material layer 200 comprising a first active material layer 210 and a second active material layer 220. Furthermore, the first active material layer 210 is in contact with the current collector 100, and the second active material layer 220 is positioned on top of the first active material layer 210. FIG. 6 shows that the first active material layer 210 and the second active material layer 220 are in contact with each other. However, this is merely an example, and additional active material layers may be inserted between them.

Meanwhile, in the electrode 10 according to an example of the present disclosure, the first active material layer 210 may be formed by the first slurry composition, and the second active material layer 220 may be formed by the second slurry composition. Additionally, the components of the first slurry composition and the second slurry composition may be independently configured, and their drying or rolling processes may also be independently performed.

In the electrode 10 according to an embodiment of the present disclosure, the adhesion between the current collector 100 and the first active material layer 210 and the adhesion between the first active material layer 210 and the second active material layer 220 may each have appropriate values so that no layer separation occurs. Additionally, even if another active material layer is included between the first active material layer 210 and the second active material layer 220, each active material layer may have an appropriate adhesive strength.

In the electrode 10, the adhesive strength between the current collector 100 and the first active material layer 210 may be 0.2 N or more, 0.21 N or more, 0.22 N or more, 0.23 N or more, 0.24 N or more, 0.25 N or more, 0.26 N or more, 0.27 N or more, 0.28 N or more, or 0.29 N or more. The upper limit of the adhesion between the current collector 100 and the first active material layer 210 is not specifically limited but may be 1 N or less or 0.5 N or less.

Additionally, in the electrode 10, the adhesion strength between the first active material layer 210 and the second active material layer 220 may be 0.25 N or more, 0.26 N or more, 0.27 N or more, 0.28 N or more, 0.29 N or more, 0.3 N or more, 0.31 N or more, 0.32 N or more, 0.33 N or more, or 0.34 N or more. The upper limit of the adhesive strength between the first active material layer 210 and the second active material layer 220 is not limited but may be 2 N or less, 1 N or less, or 0.5 N or less. Additionally, the adhesive strength between the first active material layer 210 and the second active material layer 220 may be greater than the adhesive strength between the substrate 100 and the first active material layer 210.

The adhesion between the substrate 100 and the first active material layer 210 was measured as follows. A first slurry composition forming the first active material layer 210 was applied to the substrate 100, dried at 80°C, and then rolled at 25°C to manufacture the electrode 10. Subsequently, the electrode 10 was cut into pieces measuring 2.5 cm in width and 15 cm in length to prepare measurement samples. The first active material layer 210 of the measurement samples were then attached to a polyethylene terephthalate release film such that it came into contact with the release film. Subsequently, the peel strength measured when the release film was completely peeled off between the substrate 100 and the first active material layer 210 at a peel speed of about 0.5 mm/min and a peel angle of about 90° was evaluated as the adhesive strength. At this time, the adhesive strength measurement was performed at 25°C.

Additionally, the adhesion between the first active material layer 210 and the second active material layer 220 was measured as follows. A first slurry composition forming the first active material layer 210 was coated on the substrate 100, followed by an additional coating of a second slurry composition forming the second active material layer 220 on the first slurry composition. The substrate was then dried at 80°C and rolled at 25°C to manufacture the electrode 10. Subsequently, the electrode 10 is cut into measurement samples with a width of 2.5 cm and a length of 15 cm. The second active material layer 220 of the measurement samples were then attached to a polyethylene terephthalate release film such that it comes into contact with the release film. Subsequently, the peel strength measured when the first active material layer 210 and the second active material layer 220 were completely peeled apart at a peel speed of about 0.5 mm/min and a peel angle of about 90 degrees using the release film was evaluated as the adhesive strength. At this time, the adhesive strength measurement was performed at 25°C.

If adhesive strength falls within the aforementioned range, it can be considered that the adhesive strength has an appropriate value to prevent layer separation.

In the electrode 10 according to an embodiment of the present disclosure, the first active material layer 210 may include a first binder. Additionally, in the electrode 10, the second active material layer 220 may include a second binder. The first binder and the second binder may each perform roles such as pasting the active material to be described later, mutual adhesion between active materials, adhesion between adjacent layers, and buffering against expansion and contraction of the active material.

In the electrode 10 according to an embodiment of the present disclosure, the first active material layer 210 includes the first binder in an amount of 1 wt% or more, 1.2 wt% or more, 1.4 wt% or more, 1.6 wt% or more, 1.8 wt% or more, 2 wt% or more, 2.2 wt%, 2.4 wt%, or 2.6 wt% or more, or 5 wt% or less, 4.8 wt% or less, 4.6 wt% or less, 4.4 wt% or less, 4.2 wt% or less, 4 wt% or less, 3.8 wt% or less, 3.6 wt% or less, 3.4 wt% or less, 3.2 wt% or less, 3 wt% or less, or 2.8 wt% or less. Additionally, the first active material layer 210 may include the first binder within the range formed by appropriately selecting the aforementioned upper and lower limits.

In the electrode 10 according to an embodiment of the present disclosure, the second active material layer 220

may include the second binder in an amount of 3 wt% or more, 3.2 wt% or more, 3.4 wt% or more, 3.6 wt% or more, 3.8 wt% or more, 4 wt% or more, 4.2 wt% or more, or 4.4 wt% or more, or 6 wt% or less, 5.8 wt% or less, 5.6 wt% or less, 5.4 wt% or less, 5.2 wt% or less, 5 wt% or less, 4.8 wt% or less, or 4.6 wt% or less. Additionally, the second active material layer 220 may include the second binder within the range formed by appropriately selecting the upper and lower limits described above.

In the electrode 10 according to an embodiment of the present disclosure, the content ratio of the first binder included in the first active material layer 210 may be equal to or less than the content ratio of the second binder included in the second active material layer 220. In the electrode 10 described above, the ratio P11/P22 of the content percentage P11 of the first binder contained in the first active material layer 210 to the content percentage P22 of the second binder contained in the second active material layer 220 is 0.01 or more, 0.05 or more, 0.1 or more, 0.15 or more, 0.2 or more, 0.25 or more, 0.3 or more, 0.35 or more, 0.4 or more, 0.45 or more, 0.5 or more, or 0.55 or more, or 1 or less, or less than 1, 0.95 or less, 0.9 or less, 0.85 or less, 0.8 or less, 0.75 or less, 0.7 or less, 0.65 or less, or 0.6 or less. Additionally, the ratio P11/P22 may be within a range formed by appropriately selecting the aforementioned upper and lower limits. By controlling as described above, the adhesion between the substrate 100 and the first active material layer 210 can be improved.

In the electrode 10 according to an embodiment of the present disclosure, the glass transition temperature Tg1 of the first binder may be higher than the glass transition temperature Tg2 of the second binder. That is, the first active material layer 210 in contact with the substrate 100 includes a binder with a higher glass transition temperature than the second active material layer 220, which is the outer layer, thereby preventing wrinkling and swelling of the electrode 10 and ensuring excellent capacity retention and energy density.

The term "glass transition temperature" used in this disclosure refers to the value measured using a differential scanning calorimeter DSC in accordance with ISO 1135762. Specifically, the method for measuring the glass transition temperature can be referred to in the "Property Measurement Method" below.

In the electrode 10 according to an example of the present disclosure, the difference between the glass transition temperature Tg1 of the first binder and the glass transition temperature Tg2 of the second binder is 50°C or higher, 55°C or higher, 60°C or higher, 65 °C or higher, 70°C or higher, 75°C or higher, 80°C or higher, 85°C or higher, 90°C or higher, 95°C or higher, 100°C or higher, 105°C or higher, or 110°C or higher. In another example, the difference between the glass transition temperature Tg1 of the first binder and the glass transition temperature Tg2 of the second binder is 300°C or lower, 290°C or lower, 280°C or lower, 270°C or lower, 260 °C or lower, 250°C or lower, 240°C or lower, 230°C or lower, 220°C or lower, 210°C or lower, 200°C or lower, 190°C or lower, 180°C or lower, 170°C or lower, 160°C or lower, or 150°C or lower. Additionally, in other examples, the difference between the glass transition temperature Tg1 of the first binder and the glass transition temperature Tg2 of the second binder may be within the range formed by appropriately selecting the aforementioned upper and lower limits. When the difference between the glass transition temperatures of the first binder and the second binder is as described above, the electrode 10 can prevent wrinkling and swelling phenomena, and ensure excellent capacity retention and energy density.

In the electrode 10 according to an embodiment of the present disclosure, the first active material layer 210 containing a binder with a relatively high glass transition temperature is in contact with the current collector 100, a second active material layer 220 containing a binder with a relatively lower glass transition temperature is located in the outer layer, thereby preventing wrinkling and swelling of the electrode 10 and ensuring excellent capacity retention and energy density.

In the electrode 10 according to an example of the present disclosure, the glass transition temperature Tg1 of the first binder is 50°C or higher, 55°C or higher, 60°C or higher, 65°C or higher, 70°C or higher, 75°C or higher, 80°C or higher, 85°C or higher, 90°C or higher, 95°C or higher, 100°C or higher, 105°C or higher, or 110°C or higher, or 300°C or lower, 290°C or lower, 280°C or lower, 270°C or lower, 260°C or lower, 250°C or lower, 240°C or lower, 230 °C or lower, 220°C or lower, 210°C or lower, 200°C or lower, 190°C or lower, 180°C or lower, 170°C or lower, 160°C or lower, 150°C or lower, 140°C or lower, or 130°C or lower. Additionally, the glass transition temperature Tg1 of the first binder may be within the range formed by appropriately selecting the aforementioned upper and lower limits. When the glass transition temperature of the first binder satisfies the aforementioned range, the electrode 10 can prevent wrinkling and swelling phenomena, and ensure excellent capacity retention and energy density.

In the electrode 10 according to an example of the present disclosure, the glass transition temperature Tg2 of the second binder is -100°C or higher, -90°C or higher, -80 °C or higher, -70°C or higher, -60°C or higher, -50°C or higher, -40°C or higher, -30°C or higher, -20°C or higher, -10°C or higher, or -5°C or higher, or 10°C or lower, 5°C or lower, or 0°C or lower. Additionally, the glass transition temperature Tg2 of the second binder may be within a range appropriately selected from the aforementioned upper and lower limits. When the glass transition temperature of the second binder satisfies the aforementioned range, the electrode 10 can prevent wrinkle formation and swelling phenomena while ensuring excellent capacity retention and energy density.

Furthermore, if the first binder and the second binder each have glass transition temperatures within the aforementioned ranges, their combination can prevent wrinkling and swelling of the electrode 10 and ensure excellent capacity retention and energy density.

In the electrode 10 according to an embodiment of the present disclosure, the weight average molecular weight

Mw of the first binder is 10,000 g/mol or more, 15,000 g/mol or more, 20,000 g/mol or more, 25,000 g/mol or more, 30,000 g/mol or more, 35,000 g/mol or more, 40,000 g/mol or more, 45,000 g/mol or more, 50,000 g/mol or more, 55,000 g/mol or more, 60,000 g/mol or more, 65,000 g/mol or more, or 70,000 g/mol or more, or 200,000 g/mol or less, 190,000 g/mol or less, 180,000 g/mol or less, 170,000 g/mol or less, 160,000 g/mol or less, 150,000 g/mol or less, 140,000 g/mol or less, 130,000 g/mol or less, 120,000 g/mol or less, 110,000 g/mol or less, 100,000 g/mol or less, 90,000 g/mol or less, or 80,000 g/mol or less. The weight average molecular weight Mw of the first binder may be within the range formed by appropriately selecting the aforementioned upper and lower limits.

Additionally, in the electrode 10, the polydispersity index PDI of the first binder may be 1 to 2, or 1 to 1.5.

In the electrode 10, when the weight average molecular weight of the first binder satisfies the above range, wrinkling and swelling phenomena can be prevented, and excellent capacity retention and energy density can be secured. Additionally, when the first binder satisfies the weight average molecular weight and polydispersity index within the specified range, it prevents wrinkling and swelling phenomena and ensures excellent capacity retention and energy density.

In the electrode 10 according to an example of the present disclosure, the weight average molecular weight Mw of the second binder is 5,000 g/mol or more, 6,000 g/mol or more, 7,000 g/mol or more, 8,000 g/mol or more, 9,000 g/mol or , 10,000 g/mol or more, 15,000 g/mol or more, 20,000 g/mol or more, 25,000 g/mol or more, 30,000 g/mol or more, 35,000 g/mol or more, or 40,000 g/mol or more, or 500,000 g/mol or less, 450,000 g/mol or less, 400,000 g/mol or less, 350,000 g/mol or less, 300,000 g/mol or less, 250,000 g/mol or less, or 200,000 g/mol or less. The weight average molecular weight Mw of the second binder may be within the range formed by appropriately selecting the aforementioned upper and lower limits.

Additionally, in the electrode 10, the polydispersity index PDI of the second binder may be 1 to 50, 1 to 40, 1 to 30, or 1 to 25.

In the electrode 10, when the weight average molecular weight of the second binder satisfies the above range, wrinkling and swelling phenomena can be prevented, and excellent capacity retention and energy density can be secured. Additionally, when the second binder satisfies the weight average molecular weight and polydispersity index within the specified range, it prevents wrinkling and swelling phenomena while ensuring excellent capacity retention and energy density.

Furthermore, if the first binder and the second binder each have the weight average molecular weight within the aforementioned ranges, their combination can prevent wrinkling and swelling phenomena and ensure excellent capacity retention and energy density. Furthermore, if the first binder and the second binder each have the weight average molecular weight and polydispersity index within the aforementioned ranges, their combination can prevent wrinkling and swelling phenomena in the electrode 10 and ensure excellent capacity retention and energy density.

In this disclosure, the weight average molecular weight Mw can be measured using gel permeation chromatography. Additionally, the number-average molecular weight Mn can also be measured using the aforementioned gel permeation chromatography, and the polydispersity index PDI can be derived by dividing the measured weight average molecular weight Mw by the number-average molecular weight Mn (Mw/Mn). Specifically, the method for measuring the weight average molecular weight and the poly dispersity index can be referred to in the following "Physical Property Measurement Method."

In the electrode 10 according to an example of the present disclosure, the first binder is not particularly limited in type as long as it satisfies the aforementioned glass transition temperature range. The first binder may include a polymer containing polar functional groups, which may be more advantageous for achieving the objectives of the present disclosure.

The polar functional groups may refer to functional groups that form a dipole moment due to the distribution of electrons. The polar functional groups may include one or more selected from the group consisting of amide groups, carboxyl groups, ester groups, hydroxy groups, and amine groups, but are not limited thereto.

The polymer containing the polar functional groups can be formed through a polymerization reaction using one or more monomers containing the polar functional group. Additionally, the polymer containing the polar functional groups may contain the polar functional groups in at least one polymer unit of the polymer. Furthermore, the polymer may be formed through a copolymerization reaction using one or more monomers containing the polar functional groups and one or more monomers not containing the polar functional groups.

The polymer unit used in this disclosure refers to the basic repeating unit that constitutes a polymer, meaning the repeating unit formed by the polymerizable monomers through a polymerization reaction to form the structure of the polymer. The polymerization described herein may be performed in a manner known in the art, such as bulk polymerization, solution polymerization, suspension polymerization, interfacial polymerization, or emulsion polymerization, depending on the chemical characteristics of the monomers used to form the polymer.

Additionally, the polymer in this disclosure may be a copolymer. When the polymer is a copolymer, the copolymer may be a block copolymer, gradient copolymer, or random copolymer, and is not particularly limited.

In an example of the present disclosure, the first binder in the electrode 10 may include an acrylic polymer. The

acrylic polymer refers to a polymer obtained by polymerizing a composition containing one or more acrylic monomers, and includes repeating units derived from the acrylic monomers. The acrylic monomers may include acrylic acid, methacrylic acid, or their derivatives, such as acrylic acid esters or methacrylic acid esters. Examples of the acrylic polymer include poly acrylic acid or poly methyl methacrylate, but are not limited thereto.

The inclusion of the acrylic polymer in the first binder enhances the adhesion between the first active material layer 210 and the current collector 100, prevents wrinkling and swelling of the electrode 10, and ensures excellent capacity retention and energy density.

The glass transition temperature Tg of the acrylic polymer is 50°C or higher, 55°C or higher, 60°C or higher, 65°C or higher, 70°C or higher, 75°C or higher, 80°C or higher, 85°C or higher, 90°C or higher, 95°C or higher, 100°C or higher, 105°C or higher, or 110°C or higher, or 300°C or lower, 290°C or lower, 280°C or lower, 270°C or lower, 260°C or lower, 250°C or lower, 240°C or lower, 230°C or lower, 220°C or lower, 210°C or lower, 200°C or lower, 190°C or lower, 180°C or lower, 170°C or lower, 160°C or lower, 150°C or lower, 140°C or lower, or 130°C or lower. Additionally, the glass transition temperature Tg of the acrylic polymer may be within the range formed by appropriately selecting the aforementioned upper and lower limits.

When the glass transition temperature of the acrylic polymer satisfies the above range, the formation of wrinkles and swelling in the electrode 10 can be prevented, and excellent capacity retention and energy density can be ensured.

The weight average molecular weight Mw of the acrylic polymer is 10,000 g/mol or more, 15,000 g/mol or more, 20,000 g/mol or more, 25,000 g/mol or more, 30,000 g/mol or more, 35,000 g/mol or more, 40,000 g/mol or more, 45,000 g/mol or more, 50,000 g/mol or more, 55,000 g/mol or more, 60,000 g/mol or more, 65,000 g/mol or more, or 70,000 g/mol or more, or 200,000 g/mol or less, 190,000 g/mol or less, 180,000 g/mol or less, 170,000 g/mol or less, 160,000 g/mol or less, 150,000 g/mol or less, 140,000 g/mol or less, 130,000 g/mol or less, 120,000 g/mol or less, 110,000 g/mol or less, 100,000 g/mol or less, 90,000 g/mol or less, or 80,000 g/mol or less. The weight average molecular weight Mw of the acrylic polymer may be within the range formed by appropriately selecting the aforementioned upper and lower limits.

Additionally, the polydispersity index PDI of the acrylic polymer may be 1 to 2, or 1 to 1.5.

By satisfying the weight average molecular weight and polydispersity index within the above ranges, the acrylic polymer prevents wrinkle formation and swelling phenomena while ensuring excellent capacity retention and energy density.

In the electrode 10 according to an embodiment of the present disclosure, the first active material layer 210 may additionally include other binders that can be used in the art, in addition to the first binder containing the acrylic polymer. For example, the additional binders may include polyvinylidene fluoride, a copolymer of polyhexafluoropropylene and polyvinylidene fluoride (PVdF/HFP), polyvinylacetate, polyvinylalcohol, polyethyleneoxide, polyvinyl pyrrolidone, alkylated polyethyleneoxide, polyvinylether, polytetrafluoroethylene, polyvinylchloride, polyacrylonitrile, polyvinylpyridine, styrene-butadiene rubber, or acrylonitrile-butadiene rubber, among others.

In the electrode 10 according to an example of the present disclosure, the second binder is not particularly limited in type as long as it satisfies the aforementioned glass transition temperature range.

The second binder may include a polymer comprising a first repeating unit and a second repeating unit. The first repeating unit includes carbon-carbon multiple bonds, and the second repeating unit may include an aromatic group. The carbon-carbon multiple bonds refer to double or triple bonds between carbon atoms. Additionally, the first repeating unit may include carbon-carbon multiple bonds within the main chain structure, and the second repeating unit may include aromatic groups as functional groups. Furthermore, to secure a second binder with an appropriate glass transition temperature, the first repeating unit may include a carbon-carbon double bond within the main chain structure, and the second repeating unit may include an aryl group. Here, the aryl group included in the second repeating unit is not specifically limited in the number of carbon atoms, but the number of carbon atoms in the main chain structure of the aryl group may be 6 to 30, or 6 to 26, or 6 to 22, or 6 to 20, or 6 to 18, or 6 to 15. Additionally, the aryl group included in the second repeating unit may be a phenyl group or a phenylalkyl group, etc.

In the electrode 10 according to an example of the present disclosure, the polymer containing the first repeating unit and the second repeating unit has a ratio N1/N2 of the number of moles of the first repeating unit N1 to the number of moles of the second repeating unit N2 is 1 or more, 1.2 or more, 1.4 or more, 1.6 or more, 1.8 or more, or 2 or more, or 5 or less, 4.5 or less, 4 or less, 3.5 or less, or 3 or less. By including the polymer described above, which controls the ratio of the number of moles of the aforementioned repeating units as described above, the first active material layer 210 can be combined with the electrode 10 to prevent wrinkling and swelling phenomena and ensure excellent capacity retention and energy density.

In the electrode 10 according to an embodiment of the present disclosure, the polymer containing the first repeating unit and the second repeating unit included in the second binder may be a rubber polymer. Examples of the rubber polymer include styrene-butadiene rubber or acrylonitrile-butadiene rubber.

The glass transition temperature Tg of the polymer containing the first repeating unit and the second repeating unit included in the second binder is -120°C or higher, -110°C or higher, -100°C or higher, -95°C or higher, -90°C or higher, -85°C or higher, -80°C or higher, - 75 or higher, -70°C or higher, -65°C or higher, -60°C or higher, -55°C or higher, or -50°C or

higher, or -10°C or lower, -15°C or lower, -20 or lower, -25°C or lower, -30°C or lower, -35°C or lower, -40°C or lower, or -45°C or lower. The glass transition temperature Tg of the polymer may be within the range formed by appropriately selecting the aforementioned upper and lower limits. By including a polymer comprising the first repeating unit and the second repeating unit having the glass transition temperature within the aforementioned range, the second binder, when combined with the first active material layer 210, prevents wrinkling and swelling of the electrode 10 and ensures excellent capacity retention and energy density.

In the electrode 10 according to an embodiment of the present disclosure, the weight average molecular weight Mw of the polymer containing the first repeating unit and the second repeating unit included in the second binder is 1,000 g/mol or more, 5,000 g/mol or more, 10,000 g/mol or more, 15,000 g/mol or more, 20,000 g/mol or more, 25,000 g/mol or more, 30,000 g/mol or more, 35,000 g/mol or more, or 40,000 g/mol or more, or 100,000 g/mol or less, 95,000 g/mol or less, 90,000 g/mol or less, 85,000 g/mol or less, 80,000 g/mol or less, 75,000 g/mol or less, 70,000 g/mol or less, 65,000 g/mol or less, 60,000 g/mol or less, 55,000 g/mol or less, 50,000 g/mol or less, or 45,000 g/mol or less. The weight average molecular weight Mw of the polymer may be within the range formed by appropriately selecting the aforementioned upper and lower limits.

Additionally, in the electrode 10, the polydispersity index PDI of the polymer containing the first repeating unit and the second repeating unit included in the second binder may be 1 to 5, 1 to 4.5, or 1 to 4.

In the electrode 10, when the weight average molecular weight of the polymer containing the first repeating unit and the second repeating unit satisfies the above range, wrinkling and swelling phenomena can be prevented, and excellent capacity retention and energy density can be secured. Additionally, when the polymer containing the first repeating unit and the second repeating unit satisfies the weight average molecular weight and the polydispersity index within the specified range, wrinkling and swelling phenomena can be prevented, and excellent capacity retention and energy density can be achieved.

In the electrode 10 according to an embodiment of the present disclosure, the second active material layer 220 may additionally include a thickening agent. In the present disclosure, the thickening agent may be a component that increases the viscosity measured under the same conditions. The thickening agent is not particularly limited if it is used in the art. In particular, the thickening agent may be suitable to include a cellulose polymer. For example, the second active material layer 220 may include a second binder and may additionally include a cellulose polymer as the thickening agent. Specifically, the second active material layer 220 may include a polymer comprising the aforementioned first repeating unit and second repeating unit, and a cellulose polymer. Through this combination, a second active material layer 220 with excellent flexibility and appropriate strength can be obtained. Additionally, the second active material layer 220 described above, when combined with the first active material layer 210 mentioned earlier, prevents wrinkling and swelling of the electrode 10 and ensures excellent capacity retention and energy density.

The cellulose polymer may include, for example, carboxymethyl cellulose, starch, hydroxypropyl cellulose, regenerated cellulose, cellulose acetate, cellulose acetate butylate, and cellulose acetate propionate. In the electrode 10 according to an embodiment of the present disclosure, the weight average molecular weight Mw of the cellulose polymer included in the second active material layer 220 is 50,000 g/mol or more, 60,000 g/mol or more, 70,000 g/mol or more, 80,000 g/mol or more, 90,000 g/mol or more, 100,000 g/mol or more, 110,000 g/mol or more, 120,000 g/mol or more, 130,000 g/mol or more, 140,000 g/mol or more, 150,000 g/mol or more, 160,000 g/mol or more, 170,000 g/mol or more, 180,000 g/mol or more, 190,000 g/mol or more, or 200,000 g/mol or more, or 2,000,000 g/mol or less, 1,500,000 g/mol or less, 1,000,000 g/mol or less, 900,000 g/mol or less, 800,000 g/mol or less, 700,000 g/mol or less, 600,000 g/mol or less, 500,000 g/mol or less, 400,000 g/mol or less, or 300,000 g/mol or less. The weight average molecular weight Mw of the cellulose polymer may be within the range formed by appropriately selecting the aforementioned upper and lower limits.

Additionally, in the electrode 10, the polydispersity index PDI of the cellulose polymer contained in the second active material layer 220 may be 5 to 40, 10 to 30, or 12 to 25.

In the electrode 10, when the weight average molecular weight of the cellulose polymer satisfies the above range, wrinkling and swelling phenomena can be prevented, and excellent capacity retention and energy density can be secured. Additionally, when the cellulose polymer satisfies the weight average molecular weight and polydispersity index within the specified ranges, it prevents wrinkling and swelling phenomena, ensuring excellent capacity retention and energy density.

In the electrode 10 according to an example of the present disclosure, the second binder includes a polymer comprising the first repeating unit and the second repeating unit in an amount of 55 wt% or more, 60 wt% or more, 65 wt% or more, 70 wt% or more, 75 wt% or more, 80 wt% or more, 85 wt% or more, 90 wt% or more, 95 wt% or more, or 99 wt% or more of the total weight of the second binder. By including the polymer containing the first repeating unit and the second repeating unit within the above range, the second binder prevents wrinkling and swelling of the electrode 10 when combined with the first active material layer 210, thereby ensuring excellent capacity retention and energy density.

Meanwhile, in the electrode 10 according to an embodiment of the present disclosure, in the second active material layer 220, the weight ratio P1/P2 of the polymer P1 including the first repeating unit and the second repeating unit to the cellulose polymer P2 may be 0.1 or more, 0.15 or more, 0.2 or more, 0.25 or more, 0.3 or more, 0.35 or more, 0.4 or more, 0.45 or more, or 0.5 or more, or 1 or less, 0.9 or less, 0.8 or less, 0.7 or less, or 0.6 or less. The ratio P1/P2 may be

within the range formed by appropriately selecting the aforementioned upper and lower limits. The second active material layer 220 includes a polymer comprising the first repeating unit and the second repeating unit and a cellulose polymer in the same appropriate weight ratio as described above, thereby preventing wrinkling and swelling phenomena of the electrode 10 when combined with the first active material layer 210 and ensuring excellent capacity retention and energy density.

In the electrode 10 according to an embodiment of the present disclosure, the second active material layer 220 may additionally include other binders that can be used in the art, in addition to the second binder comprising a polymer containing the first repeating unit and the second repeating unit and the cellulose polymer. For example, the additional binders may include polyvinylidene fluoride, a copolymer of polyhexafluoropropylene and polyvinylidene fluoride (PVdF/HFP), polyvinyl acetate, polyvinyl alcohol, polyethylene oxide, polyvinyl pyrrolidone, alkylated polyethylene oxide, polyvinyl ether, polytetrafluoroethylene, polyvinyl chloride, polyacrylonitrile, or polyvinyl pyrimidine, among others.

In the electrode 10 according to an embodiment of the present disclosure, the first active material layer 210 and the second active material layer 220 may each independently contain a carbon-based active material and a silicon-based active material. The carbon-based active material and the silicon-based active material may be, for example, materials capable of transmitting electrons in a lithium battery cell.

The carbon-based active material is not particularly limited and may include materials that can be used in the battery industry. Examples of such carbon-based active materials include amorphous carbon, graphite, natural graphite, synthetic graphite, meso-carbon microbeads, or pitch-based carbon fibers. These carbon-based active materials may be used alone or in combination.

The silicon-based active materials include silicon Si, alloys containing silicon, SiO, $SiO_2$, SiOx (where x is 0.01 or more and less than 2), and materials containing silicon coated or composite with conductive carbon, as well as composites of such materials. These silicon-based active materials may be used alone or in combination. Using silicon-based active materials enables high-capacity performance. However, silicon-based active materials exhibit greater volume expansion and contraction during charging and discharging compared to carbon-based active materials. The electrode 10 according to an example of the present disclosure introduces a silicon-based active material to achieve high-capacity performance while satisfying appropriate compositions, ratios, and thicknesses of the first active material layer 210 and the second active material layer 220, thereby mitigating electrode wrinkling and accommodating volume expansion.

As an alloy containing silicon, for example, an alloy composition including at least one element selected from the group consisting of titanium, iron, cobalt, nickel, and copper, and silicon may be exemplified. Additionally, as alloys containing silicon, alloy compositions including transition metals such as silicon, aluminum, and iron, or rare earth elements such as silicon, tin, and yttrium may also be used.

SiOx is a compound containing at least one of SiO and $SiO_2$ and silicon, where x is generally 0.01 or more and less than 2. SiOx can be formed, for example, by using the disproportionation reaction of SiO. Specifically, SiOx can be manufactured by heat-treating SiO in the presence of a polymer such as polyvinyl alcohol, thereby generating silicon and silicon dioxide. The heat treatment can be performed by grinding and mixing SiO and the polymer, then heating the mixture in an atmosphere containing organic gas and/or vapor at a temperature of about 900°C or higher, or about 1000°C or higher.

The composite material of silicon-containing materials and conductive carbon includes a compound obtained by heat-treating a mixture of silicon oxide and polymers such as polyvinyl alcohol and any carbon-based materials under an atmosphere containing organic gases and/or vapors. Additionally, the composite materials can be obtained using known methods such as coating the surfaces of particles of SiO with organic gases via chemical vapor deposition, or mechanochemically agglomerating SiO particles with graphite or synthetic graphite to form composite particles.

The first active material layer 210 comprises a carbon-based active material in an amount of 1,000 weight parts or more, 1,100 weight parts or more, 1,200 weight parts or more, 1,300 weight parts or more, 1,400 weight parts or more, 1,500 weight parts or more, 1,600 weight parts or more, 1,700 weight parts or more, 1,800 weight parts or more, 1,900 weight parts or more, 2,000 weight parts or more, 2,100 weight parts or more, 2,200 weight parts or more, 2,300 weight parts or more, 2,400 weight parts or more, 2,500 weight parts or more, 2,600 weight parts or more, 2,700 weight parts or more, 2,800 weight parts or more, 2,900 weight parts or more, or 3,000 weight parts or more, or 10,000 weight parts or less, 9,000 weight parts or less, 8,000 weight parts or less, 7,000 weight parts or less, 6,000 weight parts or less, 5,000 weight parts or less, or 4,000 weight parts or less, relative to 100 parts by weight of the first binder. The first active material layer 210 may include a carbon-based active material formed within the range obtained by appropriately selecting the upper and lower limits described above. The first active material layer 210 prevents wrinkling and swelling of the electrode 10 and ensures excellent capacity retention and energy density by controlling the weight ratio of the carbon-based active material and the first binder as described above.

Additionally, the weight ratio $C_1/Si_1$ of the carbon-based active material $C_1$ and the silicon-based active material $Si_1$ in the first active material layer 210 is 1 or more, 1.5 or more, 2 or more, 2.5 or more, 3 or more, 3.5 or more, 4 or more, or 4.5 or more, or 10 or less, 9 or less, 8 or less, 7 or less, 6 or less, or 5 or less. The aforementioned weight ratio $C_1/Si_1$ may be within the range formed by appropriately selecting the aforementioned upper and lower limits. If the first active material layer 210 includes the first binder and satisfies the weight ratio $C_1/Si_1$ within the aforementioned range, it can prevent

wrinkling and swelling phenomena while ensuring excellent capacity retention and energy density.

Additionally, the first active material layer 210 has an average particle size $DC_1$ of 1 μm or more, 2 μm or more, 3 μm or more, 4 μm or more, 5 μm or more, 6 μm or more, 7 μm or more, 8 μm or more, 9 μm or 10 μm or more, or 100 μm or less, 90 μm or less, 80 μm or less, 70 μm or less, 60 μm or less, 50 μm or less, or 40 μm or less. The average particle size $DC_1$ of the carbon-based active material may be within the range formed by appropriately selecting the aforementioned upper and lower limits. The first active material layer 210 can ensure excellent capacity retention and energy density by including the carbon-based active material having the average particle size.

Meanwhile, the term "average particle size" used in this disclosure refers to the D50 particle size of the measurement target, which may be measured using the MASTERSIZER3000 equipment from Malvern in accordance with the ISO-13320 standard. For specific measurements of the average particle size, refer to the "Physical Property Measurement Methods" below.

Additionally, the first active material layer 210 has an average particle size $DSi_1$ of 0.1 μm or more, 0.2 μm or more, 0.3 μm or more, 0.4 μm or more, 0.5 μm or more, 0.6 μm or more, 0.7 μm or more, 0.8 μm or more, 0.9 μm or more, or 1 μm or more, or 100 μm or less, 90 μm or less, 80 μm or less, 70 μm or less, 60 μm or less, 50 μm or less, 40 μm or less, or 30 μm or less. The average particle size $DSi_1$ of the silicon-based active material may be within the range formed by appropriately selecting the aforementioned upper and lower limits. The first active material layer 210 can ensure excellent capacity retention and energy density by including the silicon-based active material having the average particle size.

Additionally, the ratio $DC_1/DSi_1$ of the carbon-based active material in the first active material layer 210 is 1 or more, 1.1 or more, 1.2 or more, 1.3 or more, or 1.4 or more, or 20 or less, 19 or less, 18 or less, 17 or less, 16 or less, 15 or less, 14 or less, 13 or less, 12 or less, 11 or less, or 10 or less. The above ratio $OC_1/DSi_1$ may fall within a range formed by appropriately selecting the aforementioned upper and lower limits. If the first active material layer 210 includes the first binder and satisfies the average particle size ratio $DC_1/DSi_1$ within the aforementioned range, it can prevent wrinkling and swelling phenomena and ensure excellent capacity retention and energy density.

The second active material layer 220 comprises a carbon-based active material in an amount of 500 weight parts or more, 600 weight parts or more, 700 weight parts or more, 800 weight parts or more, 900 weight parts or more, 1,000 weight parts or more, 1,100 weight parts or more, 1,200 weight parts or more, 1,300 weight parts or more, 1,400 weight parts or more, 1,500 weight parts or more, 1,600 weight parts or more, or 1,700 weight parts or more, or 5,000 weight parts or less, 4,500 weight parts or less, 4,000 weight parts or less, 3,500 weight parts or less, 3,000 weight parts or less, 2,500 weight parts or less, or 2,000 weight parts or less, relative to 100 parts by weight of the second binder. The second active material layer 220 may be formed within the range obtained by appropriately selecting the upper and lower limits described above using a carbon-based active material. The second active material layer 220 prevents wrinkling and swelling of the electrode 10 and ensures excellent capacity retention and energy density by controlling the weight ratio of the carbon-based active material and the second binder as described above.

In the second active material layer 220, the weight ratio $C_2/Si_2$ in the second active material layer 220 of the carbon-based active material $C_2$ and the silicon-based active material $Si_2$ may be 1 or more, 1.5 or more, 2 or more, 2.5 or more, 3 or more, 3.5 or more, 4 or more, or 4.5 or more, or 10 or less, 9 or less, 8 or less, 7 or less, 6 or less, or 5 or less. The aforementioned weight ratio $C_2/Si_2$ may be within the range formed by appropriately selecting the aforementioned upper and lower limits. If the second active material layer 220 includes the aforementioned second binder and satisfies the aforementioned weight ratio $C_2/Si_2$ within the aforementioned range, it can prevent wrinkling and swelling phenomena and ensure excellent capacity retention and energy density. Additionally, the weight ratio $C_1/Si_1$ of the carbon-based active material $C_1$ and the silicon-based active material $Si_1$ may be greater than the weight ratio $C_2/Si_2$ of the carbon-based active material $C_2$ and the silicon-based active material $Si_2$.

Additionally, the second active material layer 220 has an average particle size $DC_2$ of 1 μm or more, 2 μm or more, 3 μm or more, 4 μm or more, 5 μm or more, 6 μm or more, 7 μm or more, 8 μm or more, 9 μm or 10 μm or more, or 100 μm or less, 90 μm or less, 80 μm or less, 70 μm or less, 60 μm or less, 50 μm or less, or 40 μm or less. The average particle size $DC_2$ of the carbon-based active material may be within the range formed by appropriately selecting the aforementioned upper and lower limits. The second active material layer 220 can ensure excellent capacity retention and energy density by including the carbon-based active material having the average particle size.

Additionally, the second active material layer 220 has an average particle size $DSi_2$ of 0.1 μm or more, 0.2 μm or more, 0.3 μm or more, 0.4 μm or more, 0.5 μm or more, 0.6 μm or more, 0.7 μm or more, 0.8 μm or more, 0.9 μm or more, or 1 μm or more, or 100 μm or less, 90 μm or less, 80 μm or less, 70 μm or less, 60 μm or less, 50 μm or less, 40 μm or less, or 30 μm or less. The average particle size $DSi_1$ of the silicon-based active material may be within the range formed by appropriately selecting the aforementioned upper and lower limits. The second active material layer 220 can ensure excellent capacity retention and energy density by including the silicon-based active material having the average particle size.

Additionally, the ratio $DC_2/DSi_2$ of the carbon-based active material in the second active material layer 220 can be 1 or more, 1.1 or more, 1.2 or more, 1.3 or more, or 1.4 or more, or 20 or less, 19 or less, 18 or less, 17 or less, 16 or less, 15 or less, 14 or less, 13 or less, 12 or less, 11 or less, or 10 or less. The aforementioned ratio $DC_2/DSi_2$ may fall within a range

formed by appropriately selecting the aforementioned upper and lower limits. When the second active material layer 220 includes the second binder and satisfies the average particle size ratio $DC_2/DSi_2$ within the range of as described above, wrinkling and swelling phenomena can be prevented, and excellent capacity retention and energy density can be secured.

Additionally, in the electrode 10 according to an example of the present disclosure, the first active material layer 210 and the second active material layer 220 may each independently contain a metal active material. The metal active material may include, for example, lithium metal or an alloy containing lithium. The alloys containing lithium may include, for example, alloys comprising at least one element selected from the group consisting of Ag, Al, Ba, Bi, Cu, Ga, Ge, In, Ni, P, Pb, Sb, Si, Sn, Sr, Zn, and Ti, but are not limited thereto.

In the electrode 10 according to an example of the present disclosure, the first active material layer 210 and the second active material layer 220 may each optionally include an additional conductive material as needed. The conductive material is not particularly limited as long as it has conductivity without causing chemical changes in the battery cell. For example, the conductive material may include graphite, such as natural graphite or synthetic graphite; carbon black, acetylene black, ketone black, channel black, phenolic black, lamp black, thermal black, etc.; conductive fibers such as carbon fibers or metal fibers; conductive tubes such as carbon nanotubes; metal powders such as fluorocarbon, aluminum, or nickel powder; conductive whiskers such as zinc oxide, potassium titanate; conductive metal oxides such as titanium oxide; conductive materials such as polyphenylene derivatives may be used.

In the electrode 10 according to an example of the present disclosure, the first active material layer 210 and the second active material layer 220 may each independently include carbon nanotubes as a conductive material as needed. The first active material layer 210 and the second active material layer 220 can secure excellent electrical conductivity by using carbon nanotubes as a conductive material. The carbon nanotubes may be distinguished based on the number of carbon walls as single-walled carbon nanotube, double-walled carbon nanotube, or multi-walled carbon nanotube. The carbon nanotubes may include one or more selected from the group consisting of the aforementioned single-walled carbon nanotube, double-walled carbon nanotube, or multi-walled carbon nanotube.

In the electrode 10 according to an example of the present disclosure, the first active material layer 210 and the second active material layer 220 may optionally include additional components such as a binder, a reinforcing agent, a leveling agent, or an electrolyte additive, as needed. The types of these components are not particularly limited, provided they are commonly used in the industry.

In the electrode 10 according to an example of the present disclosure, the ratio $H_1/H_2$ of the thickness $H_1$ of the first active material layer to the thickness $H_2$ of the second active material layer may be greater than 1. In other examples, the ratio of the thicknesses $H_1/H_2$ may be 1.1 or more, 1.2 or more, 1.3 or more, 1.4 or more, or 1.5 or more, or 10 or less, 9.5 or less, 9 or less, 8.5 or less, 8 or less, 7.5 or less, 7 or less, 6.5 or less, 6 or less, 5.5 or less, 5 or less, 4.5 or less, 4 or less, 3.5 or less, 3 or less, 2.5 or less, or 2 or less, or within a range formed by appropriately selecting the aforementioned upper and lower limits. The electrode 10 is in contact with the current collector 100, and by controlling the thickness of the first active material layer, which includes a binder having a higher glass transition temperature than the binder included in the second active material layer, within the aforementioned range, wrinkling and swelling phenomena can be prevented, and excellent capacity retention and energy density can be secured. The thicknesses of the first active material layer and the second active material layer may refer to the thicknesses after drying.

In the electrode 10 according to an example of the present disclosure, the thickness $H_1$ of the first active material layer 210 may be 60 μm or more, 61 μm or more, 62 μm or more, 63 μm or more, 64 μm or more, 65 μm or more, 66 μm or more, 67 μm or more, 68 μm or more, or 69 μm or more. In addition, the thickness $H_1$ of the first active material layer 210 may be 50% above, 51% or more, 52% or more, 53% or more, 54% or more, 55% or more, 56% or more, 57% or more, 58% or more, 59% or more, or 60% or more of the total thickness of the active material layer 200, or the upper limit is not particularly limited, but may have a thickness of 99% or less, 95% or less, 90% or less, 85% or less, 80% or less, 75% or less, or 70% or less. The upper limit of the thickness $H_1$ of the first active material layer 210 is not specifically limited, but may be determined considering the range of thicknesses that can be achieved relative to the total thickness.

Additionally, the thickness $H_2$ of the second active material layer 220 in the electrode 10 may be 50% below, 49% or less, 48% or less, 47% or less, 46% or less, 45% or less, 44% or less, 43% or less, 42% or less, 41% or less, or 40% or less, or the lower limit is not specifically limited but may have a thickness of 1% or more, 5% or more, 10% or more, 15% or more, 20% or more, 25% or more, 30% or more, 35% or more, or 40% or more. The thickness $H_2$ of the second active material layer 220 may be determined by considering the ratio to the thickness $H_1$ of the first active material layer 210. When the thickness of the first active material layer 210 and the thickness of the second active material layer 220 are each within the above ranges, excellent load characteristics and specific energy density can be secured.

The electrode 10 according to an embodiment of the present disclosure may have a Ts of 30% or less, 29.5% or less, or 29% or less according to the following equation 1. The lower limit of Ts according to the following Equation 1 is not particularly limited as a lower limit is more advantageous, but may be, for example, 0%, 1% or more, or 2% or more. In addition, Ts according to the following Equation 1 can be specifically measured and evaluated according to the following "Method for Measuring Physical Properties".

[Equation 1]

$$T_S = (T_2 - T_1)/T_1 \times 100\ (\%)$$

In Equation 1, $T_1$ denotes the thickness of the electrode 10 before charging, and $T_2$ denotes the thickness of the electrode 10 after charging to SOC (state of charge) 100 under the conditions of 0.2 CC/CV charging, 4.2 V, and 0.05C cut-off. Here, CC/CV denotes constant voltage/constant current.

The method of manufacturing the electrode 10 according to an example of the present disclosure may include a step of forming an active material layer 200. The method of manufacturing the electrode 10 may refer to the configuration of the electrode 10 described above.

In the method for manufacturing the electrode 10 according to an example of the present disclosure, the step of forming the active material layer 200 may be performed in various ways. In particular, since the active material layer 200 includes a first active material layer 210 and a second active material layer 220, it may be formed in various ways.

In the method of manufacturing the electrode 10 according to an example of the present disclosure, the first active material layer 210 may be formed with a first active material composition, and the second active material layer 220 may be formed with a second active material composition. The first active material composition may include the composition of the first active material layer 210 described above. Additionally, the second active material composition may include the composition of the second active material layer 220 described above.

The first active material composition and the second active material composition may each independently include an additional solvent as needed. The solvent may be appropriately selected based on the desired performance, and may include aqueous solvents such as pure water or ultra-pure water, organic solvents, or mixtures of two or more solvents. For example, the solvents may include N-methyl-2-pyrrolidone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, formamide, dimethyl formamide, acetonitrile, nitromethane, methyl formate, methyl acetate, triethyl phosphate, trimethyl carbonate, sulfonamide, methyl sulfonamide, 1,3-dimethyl-2-imidazolidinone, propylene carbonate derivatives, tetrahydrofuran derivatives, methyl propionate, alcohol, or ethyl propionate, etc., as organic solvents, or water-based solvents such as water, etc., may be used; however, considering drying temperature and environmental influences, water is most preferable. The concentration of the above solvents may be selected based on the performance of the battery cell 1 or other intended applications.

The first active material composition and the second active material composition may use an appropriate amount of solvent considering the composition and dispersibility of the components. For example, the first active material composition and the second active material composition may each independently contain the solvent in amounts of 50 weight parts or more, 60 weight parts or more, 70 weight parts or more, 80 weight parts or more, 90 weight parts or more, 100 weight parts or more, or 110 weight parts or more relative to 100 weight parts of the solid phase, or 10,000 weight parts or less, 5,000 weight parts or less, 3,000 weight parts or less, 2,000 weight parts or less, 1,000 weight parts or less, 500 weight parts or less, 300 weight parts or less, or 200 weight parts or less, or within a range formed by appropriately selecting the aforementioned upper and lower limits.

Additionally, the first active material composition and the second active material composition may include the various components mentioned above. Furthermore, the first active material composition and the second active material composition may be in a state where the various components are appropriately dispersed. The first active material composition and the second active material composition may be manufactured by introducing the various components in an appropriate method and order, followed by an appropriate mixing method. The mixing method is not particularly limited and may utilize known methods. Specifically, the mixing method may utilize mixers such as a ball mill, sand mill, bead mill, pigment disperser, ultrasonic disperser, homogenizer, rotary mixer, or fil mix. The specific details of the slurry composition forming the active material layer 200 will be described later.

The step of forming the active material layer 200 may be performed by coating a first active material composition on a release film, drying it, and then coating a second active material composition on the dried first active material composition layer and drying it. The release film is subsequently removed, and the formed active material layer 200 is attached to the substrate 100 to manufacture the electrode 10.

Additionally, the step of forming the active material layer 200 can be performed by applying the first active material composition onto the release film, applying the second active material composition onto the applied first active material composition, and simultaneously drying them. The release film is subsequently removed, and the formed active material layer 200 is attached to the substrate 100 to manufacture the electrode 10.

Additionally, the step of forming the active material layer 200 can be performed by applying the first active material composition to the substrate 100, drying it, and then applying the second active material composition to the dried first active material composition layer and drying it. This enables the manufacture of the electrode 10.

Furthermore, the step of forming the active material layer 200 may be performed by applying the first active

material composition, applying the second active material composition on the applied first active material composition, and drying them simultaneously. This enables the manufacture of the electrode 10.

Furthermore, the method of applying the coating is not particularly limited and may utilize known methods. Specifically, the method of applying the coating may include the doctor blade method, dip method, reverse roll method, direct roll method, gravure method, extrusion method, or brush coating method. The coating thickness of the slurry composition can be applied at an appropriate thickness considering the thickness after drying, and the aforementioned known methods can be appropriately selected and performed depending on the coating thickness. Additionally, the rolling process can be performed using known methods, such as rolling dies.

The electrode 10 according to an embodiment of the present disclosure may preferably be a negative electrode.

The battery cell 1 according to an embodiment of the present disclosure may include a positive electrode 1a, a negative electrode 1b, and a separator 1c interposed between the positive electrode 1a and the negative electrode 1b.

The basic unit that performs charging and discharging functions can be referred to as a battery cell. FIG. 1 is a diagram illustrating an exemplary structure of a battery cell according to an embodiment of the present disclosure. Referring to FIG. 1, the battery cell 1 includes a positive electrode 1a and a negative electrode 1b, and has a structure in which a separator 1c is interposed between the positive electrode 1a and the negative electrode 1b. Additionally, the battery cell 1 comprising the positive electrode 1a, negative electrode 1b, and separator 1c is referred to as an electrode assembly. The battery cell 1 includes an outer casing 1e capable of housing the electrode assembly, and has a structure in which an electrolyte 1d is filled in a sealed space formed by the outer casing 1e.

The battery cell 1 according to an embodiment of the present disclosure may have $L_R$ according to the following equation 2 of 80% or more, 81% or more, 82% or more, 83% or more, 84% or more, 85% or more, 86% or more, 87% or more, 88% or more, or 89% or more. Additionally, the upper limit of $L_R$ according to the following Equation 2 is not specifically restricted, as it is more advantageous to be higher and closer to the upper limit; however, for example, it may be 100% or less, 99% or less, 98% or less, 97% or less, 96% or less, or 95% or less. Furthermore, $L_R$ according to the following Equation 2 may be measured and evaluated in accordance with the specific "Property Measurement Method" described below. For the battery cell 1 described above, if $L_R$ according to the following Equation 2 satisfies the above range, it can be evaluated as having an excellent capacity retention rate.

[Equation 2]

$$L_R = L_2 / L_1 \times 100\ (\%)$$

In Equation 2, $L_1$ is the discharge capacity in one cycle under conditions where 25°C is maintained, and $L_2$ is the discharge capacity in 300 cycles under conditions where 25°C is maintained. In the above, one cycle is defined as charging at 2.0 C c-rate to SOC 8 to 50, charging at 0.5 C c-rate to SOC 80, and then discharging at 1/3 C c-rate to charge and discharge at DOD72 (SOC 8 to 80).

The positive electrode or cathode 1a refers to the reduction electrode that receives electrons from the electron transfer material when the battery cell 1 is discharged, and the negative electrode or 1b or anode refers to the oxidation electrode that transfers electrons to the electron transfer material when the battery cell 1 is discharged.

In the battery cell 1 according to an embodiment of the present disclosure, the positive electrode 1a or negative electrode 1b may be the electrode 10 according to the aforementioned embodiment of the present disclosure.

In the battery cell 1 according to a specific example of the present disclosure, the negative electrode 1b in the battery cell 1 may be the electrode 10 described above in the present disclosure. In the battery cell 1 according to an example of the present disclosure, the negative electrode 1b may satisfy all the configurations and characteristics of the electrode 10 described in the present disclosure.

In the battery cell 1 according to an embodiment of the present disclosure, the negative electrode 1b may include a negative electrode current collector and a negative electrode active material layer located on at least one surface of the negative electrode current collector. Here, the negative electrode current collector may be the current collector 100 of the electrode 10 described above, and the negative electrode active material layer may be the active material layer 200 of the electrode 10 described above.

Additionally, in the battery cell 1 according to an example of the present disclosure, the negative electrode active material layer of the negative electrode 1b may include a first negative electrode active material layer in contact with the negative electrode current collector and containing a first binder, and a second negative electrode active material layer located on the first negative electrode active material layer and containing a second binder. Here, the first negative electrode active material layer may be the first active material layer 210 of the electrode 10 described above, and the second negative electrode active material layer may be the second active material layer 220 of the electrode 10 described above.

Additionally, in the battery cell 1 according to an embodiment of the present disclosure, the negative electrode 1b

may satisfy all the configurations and characteristics of the electrode 10 described above, as described in That is, since the contents such as the relationship between the glass transition temperatures of the first binder and the second binder, or the thickness relationship between the first negative electrode active material layer and the second negative electrode active material layer, are the same as those of the aforementioned electrode 10, they will be omitted hereinafter.

In the battery cell 1 according to an example of the present disclosure, the positive electrode 1a can be manufactured by coating a positive electrode active material composition on a positive electrode current collector and then drying it to form a positive electrode active material layer. If necessary, rolling can be performed after drying. The methods for manufacturing the positive electrode 1a, including coating, drying, and rolling, may be referred to the method for manufacturing the electrode 10 according to an example of the present disclosure.

The positive electrode current collector may be any material that is electrically conductive and does not cause chemical changes in the battery cell 1, and its type, size, and shape are not particularly limited. The positive electrode current collector 100 may include, for example, stainless steel, aluminum, nickel, titanium, sintered carbon, or materials with surfaces treated with carbon, nickel, titanium, or silver on the surface of aluminum or stainless steel. The negative electrode current collector 100 may be any material that induces chemical changes in the battery cell 1 while maintaining conductivity, and its type, size, and shape are not particularly limited. The negative electrode current collector 100 may include, for example, copper, stainless steel, aluminum, nickel, titanium, sintered carbon, or materials with surfaces treated with carbon, nickel, titanium, silver, or the like, or aluminum-cadmium alloys.

Additionally, the positive electrode current collector may have an appropriate thickness as needed. While there are no specific restrictions, the positive electrode current collector may have a thickness of 1 μm to 500 μm, 1 μm to 300 μm, 1 μm to 100 μm, or 1 μm to 50 μm.

Additionally, the positive electrode current collector may form microscopic irregularities on its surface to further enhance adhesion with the positive electrode active material layer. For example, the form of the positive electrode current collector may be selected from one or more of the following: film, sheet, foil, net, porous material, foam, and non-woven fabric.

The positive electrode active material layer may include a positive electrode active material. The positive electrode active material is not particularly limited, but may include, for example, layered compounds such as lithium cobalt oxide, lithium nickel oxide, or compounds substituted with one or more transition metals; lithium iron oxides such as $LiFe_3O_4$; compounds with the chemical formula $Li_{1+c1}Mn_{2-c1}O_4$ ($0 \leq c1 \leq 0.33$), $LiMnO_3$ ,$LiMn_2O_3$ or $LiMnO_2$ and other lithium manganese oxides; lithium copper oxide ($Li_2CuO_2$); $LiV_3O_8$, $V_2O_5$, or $Cu_2V_2O_7$ and other vanadium oxides; chemical formula $LiNi_{1-c2}Mc_2O_2$ (where M is selected from the group consisting of Co, Mn, Al, Cu, Fe, Mg, B, and Ga, and satisfies $0.01 \leq c2 \leq 0.3$) as the chemical formula; and chemical formula $LiMn_{2-c3}Mc_3O_2$ (where M is selected from the group consisting of Co, Mn, Al, Cu, Fe, Mg, B, and Ga, and satisfies $0.01 \leq c3 \leq 0.1$) as the chemical formula; and Ta, and satisfies $0.01 \leq c3 \leq 0.1$) or $Li_2Mn_3MO_8$ (wherein M is selected from the group consisting of Fe, Co, Ni, Cu, and Zn) lithium manganese composite oxides; Lithium nickel cobalt manganese composite oxides, lithium nickel cobalt manganese aluminum composite oxides, and compounds where part of the Li in the chemical formula is substituted with an alkali metal ion, such as $LiMn_2O_4$, can be examples.

The positive electrode active material layer may include a binder. The binder is not specifically limited in type and may include a material that enhances adhesion between the positive electrode active materials and between the positive electrode active material layer and the positive electrode current collector.

The type of binder is not specifically limited. For example, polyvinylidene fluoride, polyvinyl alcohol, styrene-butadiene rubber, polyethylene oxide, carboxymethyl cellulose, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, polymethyl methacrylate, polybutyl acrylate, polyacrylonitrile, polyvinylpyrrolidone, polyvinyl acetate, polyethylene-co-vinyl acetate copolymer, and polyarylate may be selected and used.

The aforementioned positive electrode active material layer may additionally include a conductive material. The conductive material is not particularly limited as long as it possesses conductivity without causing chemical changes in the battery cell. For example, conductive materials may include graphite such as natural graphite or synthetic graphite; carbon black, acetylene black, ketone black, channel black, phenolic black, lamp black, thermal black, etc.; conductive fibers such as carbon fibers or metal fibers; conductive tubes such as carbon nanotubes; metal powders such as fluorocarbon, aluminum, or nickel powder; zinc oxide, potassium titanate, and other conductive whiskers; titanium oxide and other conductive metal oxides; polyphenylene derivatives and other conductive materials may be used.

The positive electrode active material composition forming the positive electrode active material layer may include the aforementioned positive electrode active materials and a binder, and may optionally include additional conductive materials. Additionally, the positive electrode active material composition may optionally include a solvent. The solvent may be appropriately selected based on the desired performance, and may include aqueous solvents such as pure water or ultra-pure water, organic solvents, or mixtures of two or more solvents. For example, the solvent may be N-methyl-2-pyrrolidone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, formamide, dimethyl formamide, acetonitrile, nitromethane, methyl formate, methyl acetate, triethyl phosphate, trimethoxy methane, sulfonamide, methyl sulfonamide, 1,3-dimethyl-2-imidazolidinone, propylene carbonate derivatives, tetrahydrofuran derivatives, methyl propionate, alcohol, or ethyl propionate, among other organic solvents, or aqueous solvents such as water may be used; however, considering drying temperature and environmental effects, water is most preferable. The content of the above solvents may be selected based on the performance of the battery cell 1 or other intended applications.

The positive electrode active material composition forming the positive electrode active material layer can be adjusted to achieve the desired performance by appropriately controlling the content ratios of the active material, binder, conductive agent, and solvent. These content ratios may be applied as known in the art.

Additionally, the separator 1c refers to a membrane that prevents electrical short circuits between the positive electrode and negative electrode while allowing electron-conducting materials to pass through. The separator may be used without special restrictions if it is commonly used in the industry. In particular, the separator should have low resistance to ion movement in the electrolyte and excellent moisture retention capability, such as, wettability. Specifically, porous polymer films made from polyolefin-based polymers, such as ethylene polymers, propylene polymers, ethylene/butene copolymers, ethylene/hexene copolymers, and ethylene/methacrylate copolymers, or laminated structures of two or more layers of such films may be used. Additionally, conventional porous nonwoven fabrics, such as those made from high-melting-point glass fibers, can also be used. Furthermore, coated separator membranes containing ceramic components or polymer materials may be used to ensure heat resistance or mechanical strength, and these can be used in either single-layer or multi-layer structures as appropriate.

Furthermore, the electrolyte 1d serves as a medium that facilitates the movement of electron-transferring substances to enable smooth electrochemical reactions between the positive electrode 1a and negative electrode 1b. The electrolyte may include commonly used organic liquid electrolytes, inorganic liquid electrolytes, gel-type polymer electrolytes, or molten inorganic electrolytes, though this list is not exhaustive. Meanwhile, FIG. 1 illustrates an electrolyte solution 1d in a liquid state, but as mentioned earlier, solid-state electrolytes such as gel-type polymer electrolytes can also be used. Batteries using solid-state electrolytes are generally referred to as solid batteries or all-solid batteries. In the case of liquid electrolytes, they typically contain organic solvents and lithium salts.

The organic solvents can be used without special restrictions as long as they serve as a medium through which ions involved in the electrochemical reactions of the battery cell can move. Specifically, the organic solvents include ester-based solvents such as methyl acetate, ethyl acetate, $\gamma$-butyrolactone, and $\varepsilon$-caprolactone; ether-based solvents such as dibutyl ether or tetrahydrofuran; ketone-based solvents such as cyclohexanone; Aromatic hydrocarbon solvents such as benzene and fluorobenzene; dimethyl carbonate, diethyl carbonate, and methyl ethyl carbonate; ethyl methyl carbonate, ethylene carbonate, and propylene carbonate and other carbonate-based solvents; ethyl alcohol and isopropyl alcohol and other alcohol-based solvents; nitrile compounds such as R-CN (where R is a straight-chain, branched, or cyclic hydrocarbon group with 2 to 20 carbon atoms, which may include a double bond, a ring, or an ether bond) and amide compounds such as dimethylformamide; dioxolane compounds such as 1,3-dioxolane; or sulfolane derivatives, etc., may be used. Among these, carbonate-based solvents are preferred, and a mixture of cyclic carbonates (e.g., ethylene carbonate or propylene carbonate) and low-viscosity linear carbonate compounds (e.g., ethyl methyl carbonate or diethyl carbonate) are more desirable. In this case, mixing cyclic carbonates and chain-type carbonates in a volume ratio of about 1:1 to about 1:9 can result in superior electrolyte performance.

The above lithium salts can be used without any special restrictions as long as they are compounds capable of providing lithium ions. Specifically, the above lithium salts include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI or $LiB(C_2O_4)_2$ may be used. The concentration of the lithium salt should be used within the range of 0.1 to 2.0 M. When the concentration of the lithium salt falls within the above range, the electrolyte exhibits appropriate conductivity and viscosity, thereby demonstrating excellent electrolyte performance and enabling effective movement of lithium ions.

In addition to the above electrolyte components, the electrolyte may include other components such as haloalkylene carbonate compounds (e.g., difluoroethylene carbonate), pyridine, triethyl phosphate, triethanolamine, cyclic ethers, ethylene diamine, n-glyme, hexamethyl phosphoric triamide, nitrobenzene derivatives, sulfur, quinone dyes, N-substituted oxazolidinone, N,N-substituted imidazolidine, ethylene glycol dialkyl ether, ammonium salts, pyrrole, 2-methoxyethanol, or aluminum trichloride, among others, may be included in one or more additional types. In this case, the additives may be included at a concentration of 0.1 to 5 wt% by the total weight of the electrolyte solution.

The type of electron transfer material can be classified in various ways depending on its type. For example, if the electron transfer material is lithium including lithium ions, the battery is referred to as a lithium-ion battery.

Additionally, the outer casing 1e protects the positive electrode 1a, negative electrode 1b, and separator 1c from external impacts and prevents the electrolyte 1d from leaking out. Depending on the shape of the outer casing 1e, the battery cell 1 can be classified as prismatic, cylindrical, or pouch-type.

A battery cell assembly is formed by electrically connecting one or more battery cells 1. The battery cell assembly may be exemplified by a battery module or a battery pack.

Additionally, the battery cell assembly according to an example of the present disclosure includes one or more battery cells, and the battery cells may be the battery cells 1 described above in the present disclosure.

A structure in which battery cells 1 are grouped in a certain number and housed in a housing to protect them from external impacts, heat, and vibrations is referred to as a battery module. Patent Document 1 discloses an example of a battery module. FIG. 2 is a diagram illustrating an exemplary structure of a battery module 2 according to an embodiment of the present disclosure. Referring to FIG. 2, the battery module 2 includes a structure comprising battery cell units 2a, upper and lower housings 2b-1, 2b-2, a busbar 2c, and inner and outer covers 2d-1, 2d-2.

The battery cell unit 2a includes one or more battery cells 1, and in the case of multiple cells, it may refer to a structure where the battery cells 1 are connected in series and/or parallel. The battery cell unit 2a may be housed in a space formed by the lower housing 2b-1 and the upper housing 2b-2. However, the manner of housing the battery cell unit 2a is not limited to that shown in FIG. 2.

Meanwhile, the battery cell 1 includes a positive terminal tab extending from the positive electrode and a negative terminal tab extending from the negative electrode. The battery cell unit 2a has a structure in which the number of positive electrode tabs and negative electrode tabs corresponding to the number of battery cells 1 included therein are respectively protruding. The positive electrode tabs and negative electrode tabs can be electrically connected to a busbar 2c having a slit. The positive electrode tabs and negative electrode tabs can be electrically connected by being inserted into the slits of the busbar 2c. Additionally, the battery module 2 includes an inner cover 2d-1 and an outer cover 2d-2 to cover the busbar 2c and the battery cell unit 2a.

The structure of the battery module 2 equipped with various control devices and protection systems such as a Battery Management System (BMS) and a cooling device is referred to as a battery pack. Patent Document 2 discloses an example of a battery pack. However, in recent years, there are cases where a battery pack is directly constructed from battery cells 1 rather than battery modules 2, and this is referred to as "cell-to-pack."

FIG. 3 is a diagram illustrating an exemplary structure of a battery pack according to an embodiment of the present disclosure. Referring to FIG. 3, the battery pack 3 is configured to mount one or more battery modules 2 and various control devices such as the BMS and other electrical components 3e within a housing space 3b formed inside the pack housing 3a.

The battery pack 3 ensures structural rigidity of the pack housing 3a by connecting the opposing side walls 3a-2 of the pack housing 3a via a cross member 3d extending horizontally across the bottom portion 3a-1 of the pack housing 3a, and a partition 3c formed protruding from the bottom portion 3a-1 of the pack housing 3a in a configuration connecting the cross member 3d and the side wall portions 3a-2.

The electrical device according to an embodiment of the present disclosure may include one or more selected from a group comprising a battery cell 1 according to an embodiment of the present disclosure and one or more battery cell assemblies. The aforementioned electrical device refers to a device operated by power generated from the battery cell 1, etc., and may include, for example, a mobile phone, home appliance, electric vehicle, hybrid vehicle, or energy storage system.

The structural or functional descriptions of the embodiments in the present disclosure are provided merely as examples to illustrate embodiments in accordance with the technical concept of the present disclosure. Furthermore, embodiments in accordance with the technical concept of the present disclosure may be implemented in various forms other than the embodiments described in the present disclosure. Additionally, the technical concept of the present disclosure is not limited to the embodiments described in the present disclosure.

<Method of measuring physical properties>

The physical properties mentioned below were measured as follows.

1. Weight average molecular weight and polydispersity index

The weight average molecular weight Mw was measured using Gel Permeation Chromatography (GPC). Specifically, the weight average molecular weight Mw was measured by placing the sample to be analyzed in a 5 mL vial, diluting it with tetrahydrofuran to a concentration of about 1 mg/mL, filtering the calibration standard sample and the analysis sample through a syringe filter in pore size: 0.45 $\mu$m, and then measuring it. The analysis program used was ChemStation from Agilent Technologies, and the weight average molecular weight Mw was calculated by comparing the elution time of the sample with the calibration curve. The number-average molecular weight Mn can also be measured in the same manner, and the ratio of the measured weight average molecular weight Mw to the number-average molecular weight Mn MW/Mn is the polydispersity index PDI.

<GPC measurement conditions>

Instrument: Agilent Technologies' 1200 series
Column: Agilent Technologies' TL Mix. A & B used
Solvent: tetrahydrofuran
Column temperature: 35°C
Sample concentration: 1 mg/mL, 200 $\mu\ell$ injection
Standard sample: Polystyrene (MP: 3900000, 723000, 316500, 52200, 31400, 7200, 3940, 485) used

2. Average particle size

The average particle size is the D50 particle size of the measured sample, which was measured using the MASTERSIZER3000 instrument from Malvern Instruments in accordance with ISO-13320 standards. Distilled water was used as the solvent during measurement. The laser beam incident on the dispersed measurement target in the solvent is scattered, and the intensity and directionality of the scattered laser beam vary depending on the size of the measurement target. By analyzing these values using Mie theory, the D50 particle size can be determined. Through this analysis, the distribution is calculated by converting the dispersed measurement target to the diameter of a sphere with the same volume, and the D50 value, which is the median value of the distribution, is determined to evaluate the particle size.

3. Glass transition temperature

The glass transition temperature was measured using a conventional Differential Scanning Calorimeter (DSC) device. The DSC-STAR3 device (Mettler Toledo) was used for the measurement. About 10 mg of the sample was placed in a dedicated pan, and the temperature was increased at a rate of 10°C/min to measure the glass transition temperature by monitoring the heat absorption and heat release as a function of temperature.

4. Energy density per unit volume

The energy density per volume was calculated by dividing the energy of the battery cell by the volume of the battery cell. Specifically, the volume of the battery cell was defined as the volume of the battery cell corresponding to the area occupied by the electrolyte in the battery cell. Additionally, the energy of the battery cell was calculated by multiplying the capacity by the average discharge voltage.

5. Electrode Swelling Evaluation

Electrode swelling evaluation was performed based on the thickness of the electrodes in the initially manufactured battery cells and the thickness of the electrodes in the battery cells after full charging. The thickness of the electrodes in the battery cells after full charging was confirmed by disassembling the fully charged battery cells.
Specifically, electrode swelling evaluation was conducted according to the following criteria.

[Evaluation Criteria]

PASS: Ts is 30% or less according to the following Equation 1
NG: Ts exceeds 30% according to Equation 1

[Equation 1]

$$T_S = (T2 - T1)/T1 \times 100\ (\%)$$

In Equation 1, T1denotes the thickness of the electrode of the battery cell manufactured initially and T2 denotes the thickness of the electrode of the battery cell after charging the aforementioned battery cell under SOC (state of charge) 100 conditions at 0.2 CC/CV charge, 4.2 V, and 0.05C cut-off.

6. Rapid Life Capacity Retention Rate

The fast-charge capacity retention rate was derived as $L_R$ according to Equation 2.

[Equation 2]

$$L_R = L2 / L1 \times 100 \ (\%)$$

In Equation 2, L1 is the discharge capacity of the battery cell during one cycle under conditions where 25°C is maintained, and L2is the discharge capacity of the battery cell during 300 cycles under conditions where 25°C is maintained.

Additionally, one cycle is defined as charging at a 2.0 C c-rate from SOC 8 to 50, then charging at a 0.5 C c-rate to SOC 80, followed by discharging at a 1/3C c-rate to achieve DOD72 (SOC 8 to 80).

7. Electrode wrinkling phenomenon evaluation

Electrode wrinkling phenomenon evaluation was performed based on the electrodes of battery cells after full charging. The initially manufactured battery cells were charged to SOC 100 under 0.2 CC/CV charging at 4.2 V with a 0.05C cutoff condition, then disassembled, and the surface condition of the electrodes was evaluated visually according to the criteria.

[Evaluation Criteria]

PASS: No wrinkles observed on the electrode surface
NG: Wrinkles observed on the electrode surface

8. Adhesion

(1) Adhesion between copper foil and the first active material layer

The adhesion between the copper foil and the first active material layer was measured as follows. The first slurry composition forming the first active material layer was applied to the copper foil, dried at 80°C, and then rolled at 25°C to manufacture the electrode. Subsequently, the electrode was cut into measurement samples with a width of 2.5 cm and a length of 15 cm. The first active material layer 210 of the measurement samples was then attached to a Polyethylene terephthalate release film such that it came into contact with the release film. Subsequently, the peel strength measured when the release film was completely peeled off between the substrate 100 and the first active material layer 210 at a peel speed of about 0.5 mm/min and a peel angle of about 90° was evaluated as the adhesive strength. At this time, the adhesive strength measurement was performed at 25°C.

(2) Adhesion between the first active material layer and the second active material layer

The adhesion between the first active material layer and the second active material layer was measured as follows. A first slurry composition forming the first active material layer was coated on the current collector, followed by an additional coating of a second slurry composition forming the second active material layer on the first slurry composition. The assembly was dried at 80°C and then rolled at 25°C to manufacture the electrode. Subsequently, the electrode was cut into measurement samples with a width of 2.5 cm and a length of 15 cm. The second active material layer of the measurement samples was then attached to a Polyethylene terephthalate film so that it came into contact with the film. Subsequently, the peel strength measured when the first active material layer and the second active material layer were completely peeled apart at a peel speed of about 0.5 mm/min and a peel angle of about 90 degrees using the release film was evaluated as the adhesive strength. At this time, the adhesive strength measurement was performed at 25°C.

Manufacturing Example 1.

The active material mixture A, first binder B, and conductive material SWCNT, C were mixed in a weight ratio A:B:C of 97.05:2.6:0.25 by weight, and then added deionized water as a solvent to the first slurry composition until the high-e content reached about 42% by weight of the total weight, thereby preparing the first slurry composition.

The active material mixture A was used, which consisted of a carbon-based active material A1 with an average particle size of about 10 μm to 35 μm and a silicon-based active material A2 with an average particle size of about 1 μm to 25 μm, mixed in a weight ratio A1:A2 of 80.05:17 by weight. The carbon-based active material A1 was artificial graphite, and the silicon-based active material A2 was SiOx (where x is 0.01 or more and less than 2).

The first binder B was polyacrylic acid. The polyacrylic acid used had a weight average molecular weight MW of about 70,000 g/mol and a polydispersity index PDI of about 1 to 1.5. Additionally, the polyacrylic acid used had a glass transition temperature Tg1 of about 113°C to 115°C.

Manufacturing Example 2.

The active material mixture A, second binder B, conductive material SWCNT, C, and thickening agent D were mixed in a weight ratio A:B:C:D of 96.05:1.5:0.25:3 by weight, and then added deionized water as a solvent to the second slurry composition until the solid content was about 42% by weight of the total weight, thereby preparing the second slurry composition.

The active material mixture A was used, which consisted of a carbon-based active material A1 with an average particle size of about 10 μm to 35 μm and a silicon-based active material A2 with an average particle size of about 1 μm to 25 μm, mixed in a weight ratio A1:A2 of 79.05:17 by weight. The carbon-based active material A1 was artificial graphite, and the silicon-based active material A2 was SiOx (where x is 0.01 or more and less than 2).

The second binder B was styrene butadiene rubber. Additionally, the thickening agent D was carboxymethyl cellulose. The styrene butadiene rubber used was a polymer containing the unit represented by the following Chemical Formula A.

[Chemical Formula A]

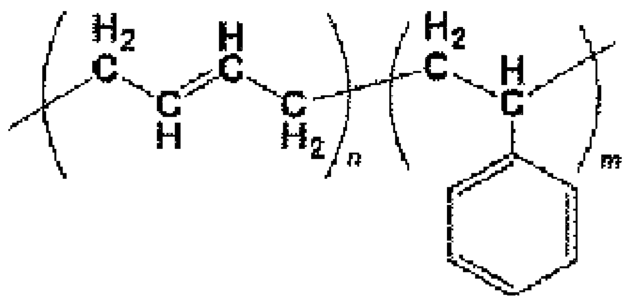

In the above Chemical Formula A, the ratio n/m of n to m was about 2 to 3.

The styrene-butadiene rubber used had a weight average molecular weight Mw of about 40,000 g/mol and a polydispersity index PDI of about 4 or less. Additionally, the styrene-butadiene rubber had a glass transition temperature Tg2 of about -55 °C.

The carboxymethyl cellulose used had a weight average molecular weight Mw of about 200,000 g/mol and a polydispersity index of about 12 to 25.

Example 1.

A first slurry composition prepared according to Manufacturing Example 1 was coated onto a copper foil having a thickness of about 8 μm, and a second slurry composition prepared according to Manufacturing Example 2 was additionally coated onto the coated first slurry composition. The first slurry composition $H_1$ and the second slurry composition $H_2$ were applied such that the thickness ratio $H_1$: $H_2$ after drying was about 6:4 and the total thickness after drying $H_1$+ $H_2$ was about 116 μm.

The copper foil coated with the first and second slurry compositions was vacuum-dried at 80°C and then rolled to manufacture a positive electrode comprising a first active material layer and a second active material layer.

Here, the adhesion strength between the copper foil and the first active material layer was about 0.29 N, and the adhesion strength between the first active material layer and the second active material layer was about 0.34 N.

A separator made of polyethylene with a thickness of about 15 μm was interposed between the positive electrode and negative electrode manufactured above to produce an electrode assembly. The positive electrode (counter electrode) was manufactured by coating a positive electrode slurry composition on an aluminum foil with a thickness of about 12 μm, followed by drying and rolling. The positive electrode slurry composition comprises a positive electrode active material A of $LiNi_{0.88}Co_{0.06}Mn_{0.06}O_2$, a binder B of polyvinylidene fluoride, and a conductive material C of carbon in a weight ratio A:B:C

of 98:1:1, and then dispersed in an appropriate amount of N-methyl-2-pyrrolidone.

The electrode assembly was encapsulated in a pouch with a thickness of 5 mm, a width of 50 mm, and a height of 60 mm, filled with an aqueous electrolyte, and the pouch was sealed to form a battery cell. The non-aqueous electrolyte was prepared by mixing ethylene carbonate and ethyl methyl carbonate in a volume ratio of 25:75, and adding $LiPF_6$ at a concentration of 1M to the non-aqueous electrolyte solvent.

Comparative Example 1.

The first slurry composition $H_1$ and the second slurry composition $H_2$ were coated such that the thickness ratio $H_1$: $H_2$ was about 5:5 after drying, and the positive electrode and battery cell were manufactured in the same manner as in Example 1, except for the above.

Comparative Example 2.

The first slurry composition $H_1$ and the second slurry composition $H_2$ were applied such that the thickness ratio $H_1$: $H_2$ after drying was about 4:6, and the negative electrode and battery cell were manufactured in the same manner as in the above Example 1.

Comparative Example 3.

The first slurry composition prepared in Example 1 was applied to a copper foil with a thickness of about 8 μm after drying, such that the total thickness was about 105 μm. The copper foil with the first slurry composition applied was vacuum-dried at 80°C and then rolled to produce the negative electrode.

Additionally, the battery cell was manufactured using the negative electrode produced in the above manner, following the same procedure as in Example 1.

Comparative Example 4.

A second slurry composition prepared in Example 2 was dried and applied to a copper foil with a thickness of about 8 μm until the total thickness was about 110 μm. The copper foil coated with the second slurry composition was vacuum-dried at 80°C and then rolled to form a negative electrode.

Additionally, the battery cell was manufactured using the negative electrode produced in the above manner, following the same procedure as in Example 1.

Comparative Example 5.

A second slurry composition prepared in Example 2 was applied to a copper foil with a thickness of about 8 μm, and the first slurry composition prepared in Manufacturing Example 1 was additionally applied to the applied second slurry composition. The second slurry composition $H_2$ and the first slurry composition $H_1$ were applied such that the thickness ratio $H_2$ : $H_1$ after drying was about 6:4 and the total thickness $H_1$+ $H_2$ after drying was about 116 μm.

The copper foil coated with the first and second slurry compositions was vacuum-dried at 80°C and then rolled to manufacture the negative electrode.

Additionally, the negative electrode manufactured in the above manner was used to manufacture a battery cell in the same manner as in Example 1.

The evaluation results of the positive electrodes or battery cells manufactured in the above Example 1 and Comparative Examples 1 to 5 are summarized in the following Table 1. In the following Table 1, the electrode swelling evaluation and electrode wrinkling phenomenon evaluation were performed on the negative electrodes. Furthermore, in Table 1, the values in the electrode swelling evaluation represent the $T_s$ value according to the above [Equation 1], and the values in the fast-charge capacity retention rate represent the $L_R$ value according to the above [Equation 2].

The evaluation results of the rapid life capacity retention for the battery cells manufactured in the above Example 1 and Comparative Examples 1 to 5 are shown in FIG. 4 (where the number of cycles indicates the number of cycles). Additionally, the electrode surfaces of the battery cells manufactured in the above Example 1 and Comparative Examples 1 are shown in FIG. 5 ((a): Example 1, (b): Comparative Example 1)

[Table 1]

| Category | Energy Density per Volume (Wh/L) | Electrode Swelling Evaluation | Rapid life capacity retention rate (@300 cycles) | Electrode wrinkling evaluation |
|---|---|---|---|---|
| Example 1 | 76 | PASS (28.6%) | 89.0 | PASS |
| Comparison Example 1 | 756 | NG (31.5%) | 86.7 | NG |
| Comparison Example 2 | 752 | NG (33.0%) | 71.6 | NG |
| Comparison Example 3 | 744 | NG (34.1%) | 75.5 | NG |
| Comparison Example 4 | 739 | NG (32.8%) | 78.6 | PASS |
| Comparison Example 5 | 762 | NG (32.5%) | 80.9 | PASS |

**[Industrial Applicability]**

The present disclosure provides an electrode that prevents wrinkle formation and swelling phenomena, and has excellent capacity retention and energy density. Additionally, the present disclosure provides a battery cell, battery module, and battery pack including the above-mentioned electrode, and an electrical device including at least one of the above-mentioned battery cells, battery module, and battery pack.

## Claims

**1.** An electrode comprising:

a current collector; and
an active material layer positioned on at least a surface of the current collector;
wherein the active material layer includes a first active material layer in contact with the current collector and including a first binder, and a second active material layer positioned on the first active material layer and including a second binder,
wherein a glass transition temperature of the first binder is greater than a glass transition temperature of the second binder, and a ratio of the thickness of the first active material layer to the thickness of the second active material layer is greater than 1.

**2.** The electrode according to claim 1, wherein the glass transition temperature of the first binder is 50°C to 300°C, and the glass transition temperature of the second binder is -100°C to 10°C.

**3.** The electrode according to claim 1, wherein the weight average molecular weight of the first binder is 10,000 g/mol to 200,000 g/mol, and the weight average molecular weight of the second binder is 5,000 g/mol to 500,000 g/mol.

**4.** The electrode according to claim 1, wherein the first binder includes a polymer containing polar functional groups.

**5.** The electrode according to claim 1, wherein the first binder is an electrode containing an acrylic polymer.

**6.** The electrode according to claim 1, wherein the second binder includes a polymer including a first repeating unit and a second repeating unit,
wherein the first repeating unit includes carbon-carbon multiple bonds, and the second repeating unit includes an aromatic group.

**7.** The electrode according to claim 6, wherein a ratio of the number of moles of the first repeating unit to the number of moles of the second repeating unit in the polymer is 1 to 5.

**8.** The electrode according to claim 6, wherein the second active material layer further contains a cellulose polymer.

**9.** The electrode according to claim 8, wherein a weight ratio of the polymer including the first repeating unit and the second repeating unit to the cellulose polymer in the second active material layer is 0.1 to 1.

**10.** The electrode according to claim 1, wherein the first active material layer contains the first binder in an amount of 1 wt% to 5 wt% by the total weight, and
the second active material layer contains the second binder in an amount of 3 wt% to 6 wt% by the total weight.

**11.** The electrode according to claim 1, wherein the first active material layer and the second active material layer each independently contain a carbon-based active material and a silicon-based active material.

**12.** The electrode according to claim 11, wherein a weight ratio of the carbon-based active material to the silicon-based active material is 1 to 10 in the first active material layer, and a weight ratio of the carbon-based active material to the silicon-based active material is 1 to 10 in the second active material layer.

**13.** The electrode according to claim 11, wherein a ratio of an average particle size of the carbon-based active material to an average particle size of the silicon-based active material is 1 to 20 in the first active material layer, and a ratio of an average particle size of the carbon-based active material to an average particle size of the silicon-based active material is 1 to 20 in the second active material layer.

**14.** The electrode according to claim 11, wherein the first active material layer includes the carbon-based active material in an amount of 1,000 to 10,000 parts by weight relative to 100 parts by weight of the first binder, and the second active material layer includes the carbon-based active material in an amount of 500 to 5,000 parts by weight relative to 100 parts by weight of the second binder.

**15.** The electrode according to claim 1, wherein a difference between the glass transition temperature of the first binder and the glass transition temperature of the second binder is 50°C or more.

**16.** A battery cell comprising:

a positive electrode;
a negative electrode; and
a separator interposed between the positive electrode and the negative electrode;
wherein the negative electrode includes a negative electrode current collector and a negative electrode active material layer positioned on at least a surface of the negative electrode current collector,
wherein the negative electrode active material layer includes a first negative electrode active material layer in contact with the negative electrode current collector and including a first binder, and a second negative electrode active material layer positioned on the first negative electrode active material layer and including a second binder,
wherein a glass transition temperature of the first binder is greater than a glass transition temperature of the second binder, and a ratio of the thickness of the first negative electrode active material layer to the thickness of the second negative electrode active material layer is greater than 1.

FIG. 1

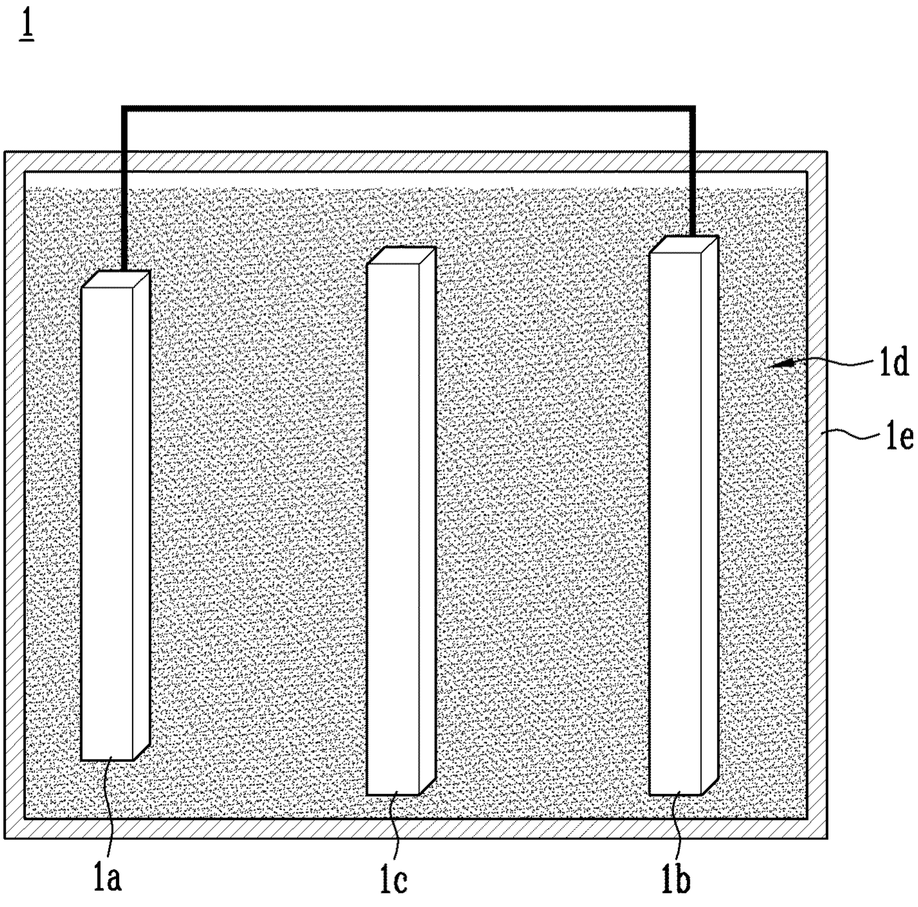

FIG. 2

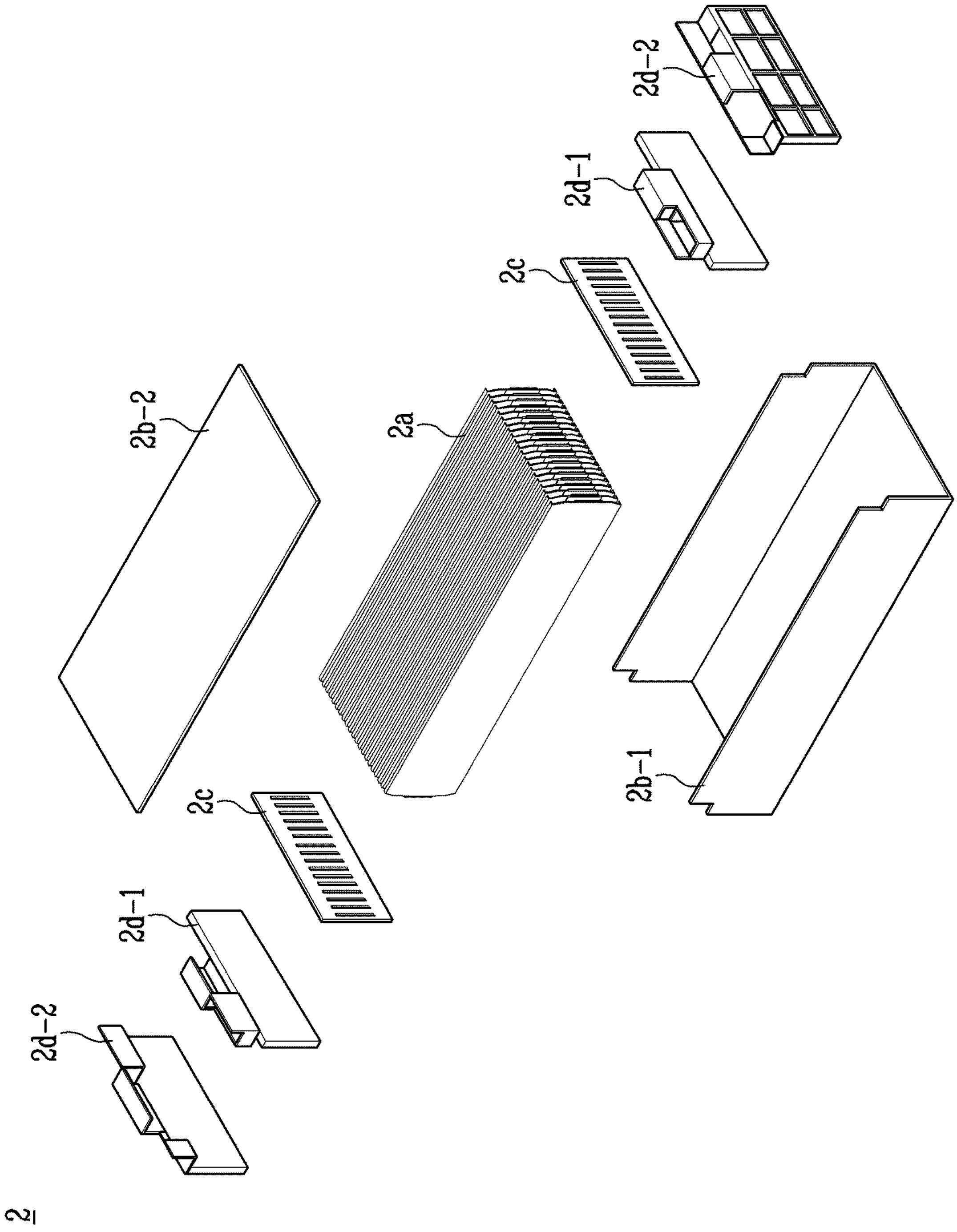

FIG. 3

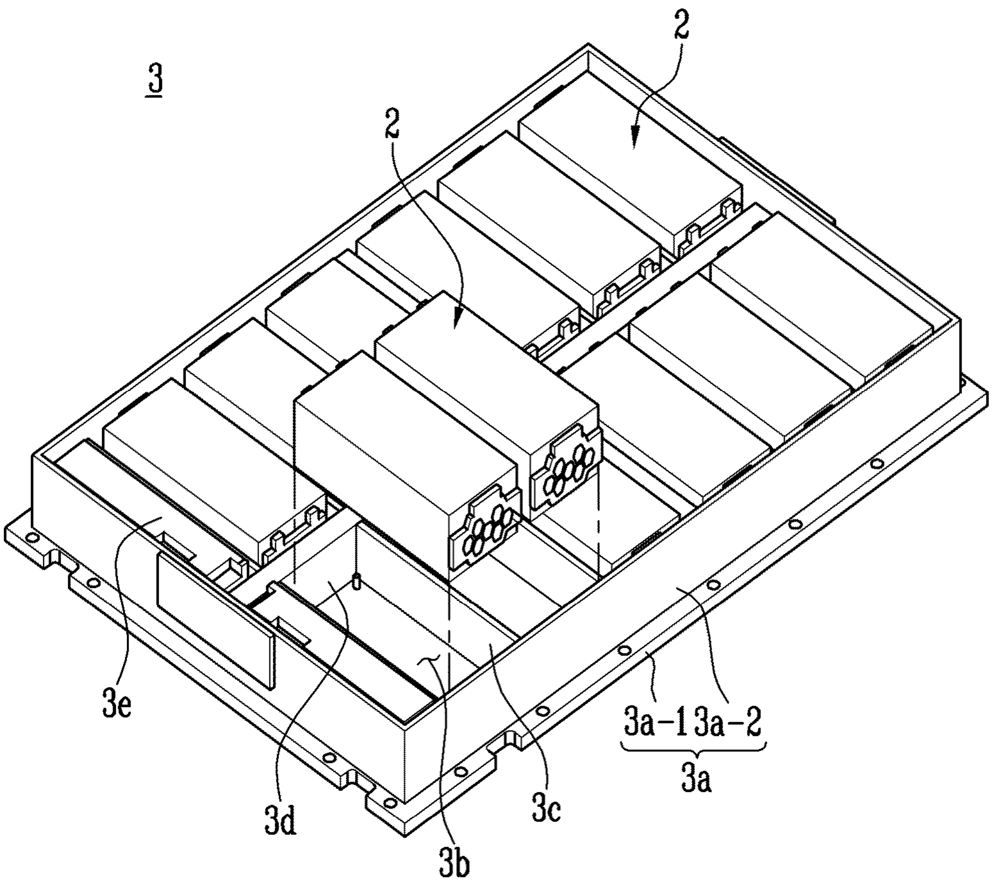

FIG. 4

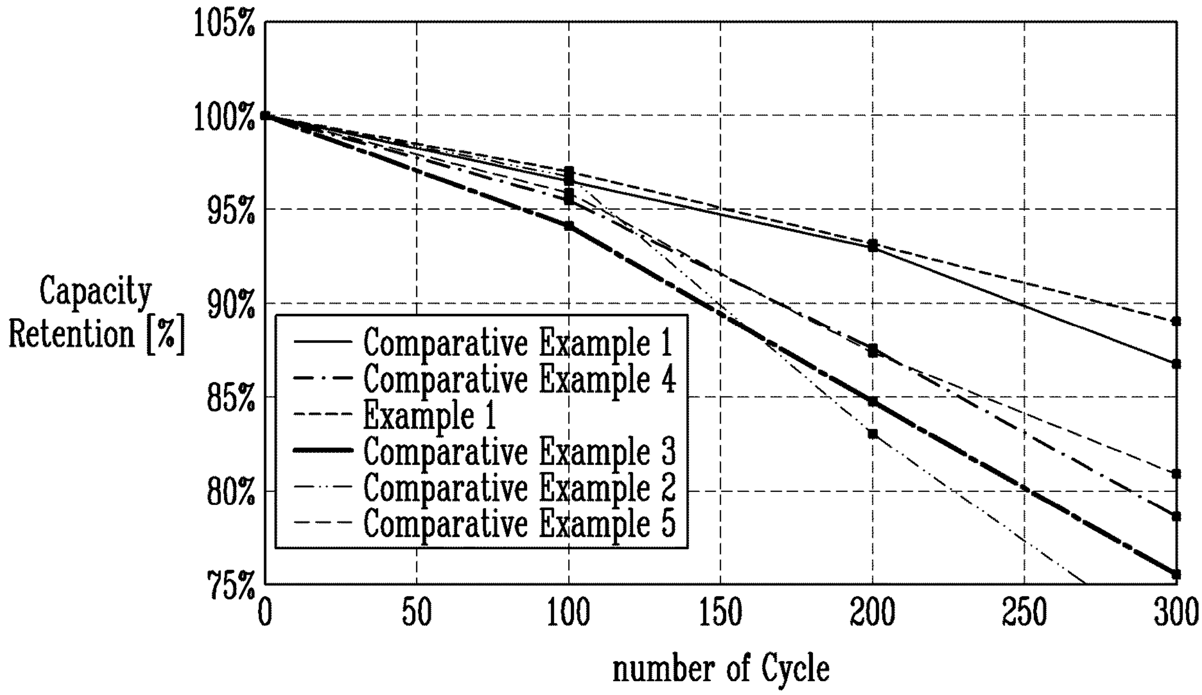
105%
100%
95%
90%
85%
80%
75%
Capacity Retention [%]
0
50
100
150
200
250
300
number of Cycle
Comparative Example 1
Comparative Example 4
Example 1
Comparative Example 3
Comparative Example 2
Comparative Example 5

FIG. 5

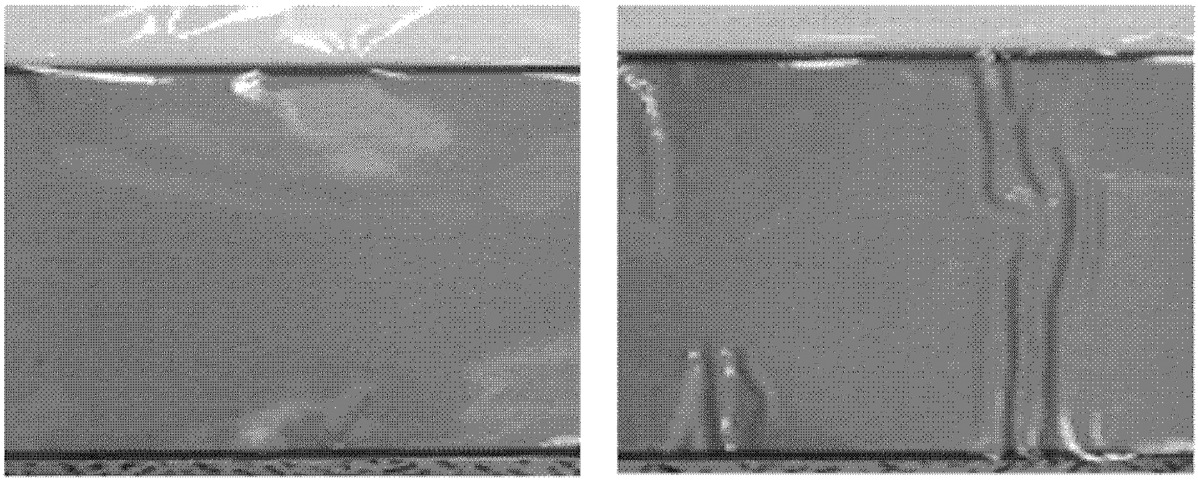

(a) (b)

FIG. 6

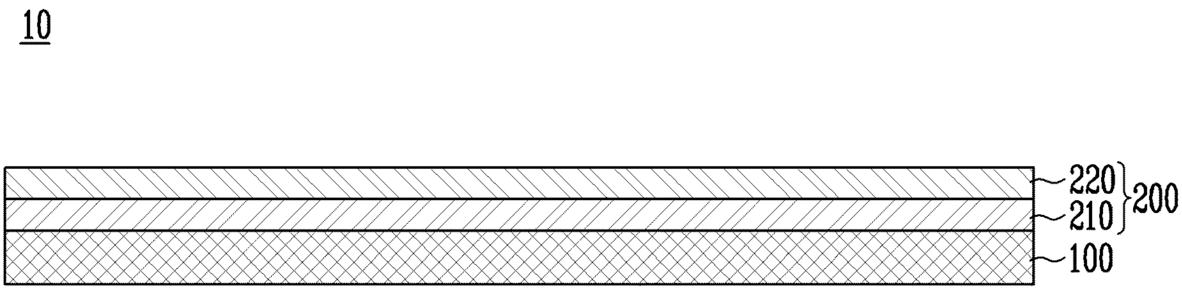

## INTERNATIONAL SEARCH REPORT

International application No.
**PCT/KR2024/007641**

### A. CLASSIFICATION OF SUBJECT MATTER

**H01M 4/13**(2010.01)i; **H01M 4/62**(2006.01)i; **H01M 4/36**(2006.01)i; **H01M 4/587**(2010.01)i; **H01M 4/38**(2006.01)i; **H01M 10/052**(2010.01)i; **C08L 33/00**(2006.01)i; **C08L 9/06**(2006.01)i; **C08L 9/02**(2006.01)i; **C08L 1/02**(2006.01)i

According to International Patent Classification (IPC) or to both national classification and IPC

### B. FIELDS SEARCHED

Minimum documentation searched (classification system followed by classification symbols)

H01M 4/13(2010.01); H01M 10/052(2010.01); H01M 4/131(2010.01); H01M 4/133(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집전체(current collector), 활물질(active material), 바인더(binder), 유리전이온도(glass transition temperature, Tg), 전극(electrode), 배터리(battery)

### C. DOCUMENTS CONSIDERED TO BE RELEVANT

| Category* | Citation of document, with indication, where appropriate, of the relevant passages | Relevant to claim No. |
|---|---|---|
| X<br>Y | KR 10-2022-0157095 A (TECH UNIVERSITY OF KOREA INDUSTRY ACADEMIC COOPERATION FOUNDATION) 29 November 2022 (2022-11-29)<br>See claims 1, 4, 5, 7, 8 and 14. | 1-7,10,15,16<br>8,9,11-14 |
| Y | KR 10-2023-0071384 A (LG ENERGY SOLUTION, LTD.) 23 May 2023 (2023-05-23)<br>See claims 1 and 4-7, and paragraphs [0038], [0049], [0072], [0083], [0090], [0096] and [0097]. | 8,9,11-14 |
| A | KR 10-2023-0050075 A (SAMSUNG SDI CO., LTD.) 14 April 2023 (2023-04-14)<br>See claims 1, 5, 10 and 18. | 1-16 |
| A | CN 114864870 A (ZHONGCHUANGXIN AVIATION TECHNOLOGY (HEFEI) CO., LTD. et al.) 05 August 2022 (2022-08-05)<br>See claims 1, 3, 5 and 8. | 1-16 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 September 2024** | **11 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/007641**

**C. DOCUMENTS CONSIDERED TO BE RELEVANT**

| Category* | Citation of document, with indication, where appropriate, of the relevant passages | Relevant to claim No. |
| --- | --- | --- |
| A | CN 114464771 A (ZHUHAI COSMX BATTERY CO., LTD.) 10 May 2022 (2022-05-10) See claims 1, 6, 9 and 10. | 1-16 |

Form PCT/ISA/210 (second sheet) (July 2022)

**INTERNATIONAL SEARCH REPORT**
**Information on patent family members**

International application No.
**PCT/KR2024/007641**

| Patent document cited in search report | | | Publication date (day/month/year) | Patent family member(s) | | | Publication date (day/month/year) |
|---|---|---|---|---|---|---|---|
| KR | 10-2022-0157095 | A | 29 November 2022 | KR | 10-2620768 | B1 | 04 January 2024 |
| | | | | WO | 2022-244918 | A1 | 24 November 2022 |
| KR | 10-2023-0071384 | A | 23 May 2023 | WO | 2023-090847 | A1 | 25 May 2023 |
| KR | 10-2023-0050075 | A | 14 April 2023 | CN | 116830293 | A | 29 September 2023 |
| | | | | EP | 4258381 | A1 | 11 October 2023 |
| | | | | US | 2023-0116454 | A1 | 13 April 2023 |
| | | | | WO | 2023-059108 | A1 | 13 April 2023 |
| CN | 114864870 | A | 05 August 2022 | CN | 114864870 | B | 28 May 2024 |
| CN | 114464771 | A | 10 May 2022 | | None | | |

Form PCT/ISA/210 (patent family annex) (July 2022)